# EUROPÄISCHE PATENTANMELDUNG

(11) **EP 1 667 022 A2**
(43) Veröffentlichungstag der Anmeldung: **07.06.2006**
(21) Anmeldenummer: 05110509.6
(22) Anmeldetag: 09.11.2005
(51) Int. Cl.: G06F 11/14, G06F 11/16

(54) **Vorrichtung und Verfahren zur Behebung von Fehlern bei einem Prozessor mit zwei Ausführungseinheiten**

(30) Priorität: 02.12.2004 DE 102004058288
(71) Anmelder: ROBERT BOSCH GMBH, 70442 Stuttgart (DE)
(72) Erfinder: Harter, Werner, 75428, Illingen (DE); Kottke, Thomas, 71139, Ehningen (DE); Collani, Yorck, 71717, Beilstein (DE); Steininger, Andreas, 1230, Wien (AT); El Salloum, Christian, 1060, Wien (AT)

(57) **Zusammenfassung**

Verfahren und Vorrichtung zur Behebung von Fehlern bei einem Prozessor mit zwei Ausführungseinheiten sowie entsprechender Prozessor, wobei Register vorgesehen sind in welchen Instruktionen und/oder diesen zugeordnete Informationen ablegbar sind, wobei die Instruktionen redundant in beiden Ausführungseinheiten abgearbeitet werden und Vergleichsmittel enthalten sind, die derart gestaltet sind, dass durch einen Vergleich der Instruktionen und/oder der zugeordneten Informationen eine Abweichung und damit ein Fehler erkannt wird, wobei eine Aufteilung der Register des Prozessors in erste Register und zweite Register vorgegeben ist, wobei die ersten Register derart gestaltet sind, dass aus ihnen ein vorgebbarer Zustand des Prozessors und Inhalte der zweiten Register herleitbar sind, wobei Mittel zum Zurückrollen enthalten sind, die derart ausgebildet sind, dass wenigstens eine Instruktion und/oder die Informationen in den ersten Registern zurückgerollt und erneut ausgeführt und/oder wiederhergestellt werden.

## Beschreibung

### Stand der Technik

Die Erfindung betrifft eine Vorrichtung und ein Verfahren zur Behebung von Fehlern bei einem Prozessor mit zwei Ausführungseinheiten bzw. CPUs sowie einen entsprechenden Prozessor gemäß den Obergegriffen der unabhängigen Ansprüche.

Aufgrund der immer kleiner werdenden Halbleiterstrukturen wird eine Zunahme von transienten Prozessorfehlern erwartet, die z.B. durch kosmische Strahlung hervorgerufen werden. Auch heute treten schon transiente Fehler auf, die durch elektromagnetische Strahlung oder Einkopplung von Störungen in die Versorgungsleitungen der Prozessoren hervorgerufen werden.

Nach dem Stand der Technik werden Fehler in einem Prozessor durch zusätzliche Überwachungseinrichtungen oder durch einen redundanten Rechner bzw. durch Einsatz eines Dual-Core Rechners erkannt.

Ein Dual-Core-Prozessesor bzw. Prozessorsystem besteht aus zwei Ausführungseinheiten insbesondere zwei CPUs (Master und Checker), die parallel das gleiche Programm abarbeiten. Die beiden CPUs (Central Processing Unit) können taktsynchron also parallel (im Lockstep Mode) oder um einige Takte zeitversetzt arbeiten. Beide CPUs empfangen dieselben Eingangsdaten und arbeiten das gleiche Programm ab, die Ausgänge des Dual-Cores werden jedoch ausschließlich durch den Master getrieben. In jedem Taktzyklus werden die Ausgänge des Masters mit den Ausgängen des Checkers verglichen und dadurch überprüft. Stimmen die Ausgangswerte der beiden CPUs nicht überein, so bedeutet das, dass sich mindestens eine der beiden CPUs in einem fehlerhaften Zustand befindet.

In einer Beispielarchitektur für einen Dual Core Prozessor vergleicht ein Komparator dabei die Ausgänge (Instruktionsadresse, Data Out, Kontrollsignale) beider Cores (alle Vergleiche finden parallel statt):
a: Instruktionsadresse (Ohne eine Überprüfung der Instruktionsadresse könnte der Master unbemerkt eine falsche Instruktion adressieren, die dann in beiden Prozessoren unerkannt abgearbeitet werden würde.)
b: Data Out
c: Kontrollsignale wie Write Enable oder Read Enable

Der Fehler wird nach außen signalisiert und führt im Standardfall zum Abschalten des betroffenen Steuergerätes. Dieser Ablauf würde bei der erwarteten Zunahme von transienten Fehlern zu einem häufigeren Abschalten von Steuergeräten führen. Da bei transienten Fehlern keine Schädigung des Rechners vorliegt, wäre es hilfreich, den Rechner möglichst schnell wieder der Anwendung zur Verfiigung zu stellen, ohne dass das System abschaltet oder ein Neustart erfolgen muss.

Methoden, die transiente Fehler beheben und dabei einen kompletten Neustart des Prozessors vermeiden, sind für Prozessoren, die im Master/Checker Betrieb arbeiten, nur vereinzelt zu finden.

Dazu zeigt die Offenlegeung von Jiri Gaisler: "Concurrent error-detection and modular fault-tolerance in a 32-bit processing core for embedded space flight applications" vom Twenty-Fourth International Symposium on Fault-Tolerant Computing, pages 128-130, june 1994 einen Prozessor mit integrierten Fehlererkennungs- und Recovery-Mechanismen (z.B. Parity Checking und automatische Instruktionswiederholung), der fähig ist, im Master/Checker Betrieb zu arbeiten. Die internen Fehlererkennungsmechanismen im Master oder im Checker triggern eine Recovery Operation immer nur lokal in einem Prozessor. Dadurch verlieren die beiden Prozessoren ihre Synchronität zueinander, und ein Vergleich der Ausgänge kann nicht mehr stattfinden. Die einzige Möglichkeit, die beiden Prozessoren wieder zu synchronisieren besteht in einem Neustart beider Prozessoren während einer unkritischen Phase der Mission.

Weiterhin zeigt die Schrift von Yuval Tamir and Marc Tremblay mit dem Titel "Highperformance fault-tolerant vlsi systems using micro rollback" aus IEEE Transactions on Computers, volume 39, pages 548-554, 1990 eine Methode namens "Micro Rollback", durch die der komplette Zustand eines beliebigen VLSI-Systems um eine bestimmte Anzahl von Takten zurückgerollt werden kann. Dazu werden alle Register, und das Registerfile als gesamtes durch einen zusätzlichen FIFO Buffer erweitert. Neue Werte werden bei dieser Methode nicht direkt in das eigentliche Register geschrieben, sondern vorerst im Buffer abgelegt, und erst nach ihrer Überprüfung in das Register übertragen. Um den gesamten Prozessorzustand zurückzurollen, werden die Inhalte aller FIFO Buffer als ungültig markiert. Wenn das System um bis zu k Taktzyklen zurückgerollt werden können soll, werden für jedes Register k Puffer benötigt.

Die im Stand der Technik vorgestellten Prozessoren haben somit zum einen vor allem den Mangel, dass sie durch Recovery-Operationen ihre Synchronität verlieren, da Recovery immer nur in einem Prozessor lokal durchgeführt wird. Die Grundidee des beschriebenen Verfahrens (Micro Rollback) dabei ist, jede Komponente eines Systems unabhängig mit Rollbackfähigkeit zu erweitern, um im Fehlerfall den gesamten Systemzustand auf konsistente Weise zurückrollen zu können. Der architekturspezifische Zusammenhang der einzelnen Komponenten (Register, Registerfile, ...) zueinander muss hierbei nicht betrachtet werden, da durch Rollback wirklich immer der gesamte Systemzustand konsistent zurückgerollt wird. Der Nachteil dieses Verfahrens ist ein großer Hardware-Overhead, der proportional zur Systemgröße (z.B. Anzahl der Pipelinestufen im Prozessor) wächst.

Damit stellt sich die Aufgabe Fehler, insbesondere transiente Fehler zu beheben ohne einen System- oder Prozessor-Neustart bei gleichzeitiger Vermeidung von zu großem insbesondere Hardware Aufwand.

### Vorteile der Erfindung und Beschreibung der Ausführungsbeispiele

Diese Aufgabe wird durch ein Verfahren und eine Vorrichtung zur Behebung von Fehlern bei einem Prozessor mit zwei Ausführungseinheiten sowie entsprechendem Prozessor gelöst, wobei Register vorgesehen sind in welchen Instruktionen und/oder diesen zugeordnete Informationen ablegbar sind, wobei die Instruktionen redundant in beiden Ausführungseinheiten abgearbeitet werden und Vergleichsmittel wie z.B. ein Komparator enthalten sind, die derart gestaltet sind, dass durch einen Vergleich der Instruktionen und/oder der zugeordneten Informationen eine Abweichung und damit ein Fehler erkannt wird, wobei vorteilhafter Weise eine Aufteilung der Register des Prozessors in erste Register und zweite Register vorgegeben ist, wobei die ersten Register derart gestaltet sind, dass aus ihnen ein vorgebbarer Zustand des Prozessors und Inhalte der zweiten Register herleitbar sind, wobei Mittel zum Zurückrollen enthalten sind, die derart ausgebildet sind, dass wenigstens eine Instruktion und/oder die Informationen in den ersten Registern zurückgerollt und erneut ausgeführt und/oder wiederhergestellt werden.

Erfindungsgemäß wird nur ein Teil der Registerinhalte eines Prozessors benötigt, um den gesamten Prozessorzustand herleiten zu können. Wir teilen die Menge aller Register eines Prozessors in zwei Teilmengen:
1) "*Essential Registers* ": Die Inhalte dieser ersten Register sind hinreichend um einen konsistenten Prozessorzustand aufbauen zu können.
*2)* "*Derivable Registers":* Diese zweiten Register können aus den *Essential Registers* vollständig hergeleitet werden.

Bei dieser Betrachtungsweise ist es ausreichend, ausschließlich die *Essential Registers* vor fehlerhaften Werten zu schützen oder mit Rollbackfähigkeit auszustatten, um den gesamten Prozessor konsistent in einen früheren Zustand zurückrollen zu können. Das bedeutet, dass die Mittel zum Zurückrollen zweckmäßig nur den ersten Registern zugeordnet und/oder nur in diesen enthalten sind oder die Mittel zum Zurückrollen derart gestaltet sind, dass wenigstens eine Instruktion und/oder die Informationen nur in den ersten Registern zurückgerollt wird.

So werden auch die Vergleichsmittel zweckmäßig vor den ersten Registern und/oder vor den Ausgängen vorgesehen.

Dabei ist jedem ersten Register vorteilhaft wenigstens ein, insbesondere zwei Pufferbausteine zugeordnet, was auch für Registerfiles gilt. D.h. die Register sind in wenigstens einem Registerfile organisiert und diesem Registerfile ist wenigstens ein , insbesondere zwei Pufferbausteine mit je einem Pufferspeicher für Adressen und einem Pufferspeicher für Daten zugeordnet.

Zweckmäßiger Weise sind Mittel enthalten die eine Gültigkeit des Pufferbausteins oder Pufferspeichers z.B. durch ein Valid Flag vorgeben und/oder anzeigen, wobei die Gültigkeit der Instruktionen und/oder Informationen über eine Gültigkeitskennung (eben z.B. Valid Flag) vorgebbar und/oder feststellbar ist und diese Gültigkeitskennung entweder über ein Rücksetzsignal rückgesetzt wird oder über ein Gattersignal, insbesondere eines UND-Gatters.

Dabei sind erfindungsgemäß beide Ansätze vorgesehen, nämlich, dass die beiden Ausführungseinheiten und damit auch die Erfindung parallel ohne Taktversatz arbeiten oder aber mit Taktversatz.

Zeckmäßig sind dabei wenigstens alle ersten Register doppelt vorhanden und jeweils einmal einer Ausführungseinheit zugeordnet.

Vorteilhaft ist das Zurückrollen in zwei Phasen aufgeteilt, wobei zunächst die ersten Register also insbesondere die Instruktionen und/oder Informationen der ersten Register zurückgerollt werden und dann die Inhalte der zweiten Register daraus hergeleitet werden. Dabei werden die Inhalte der zweiten Register zweckmäßig durch einen Trap/Exception Mechanismus hergeleitet.

In einer speziellen Ausführungsform zur weiteren Steigerung der Sicherheit wird zusätzlich zum Zurückrollen wenigstens ein Bitflip also Bitkipper eines ersten Registers einer Ausführungseinheit behoben, indem der Bitflip in beiden Ausführungseinheiten angezeigt wird. Dies hat den Vorteil, dass die Synchronität beider Ausführungseinheiten mit und ohne Taktversatz erhalten bleibt. Dazu wird der Bitflip in beiden Ausführungseinheiten gleichzeitig angezeigt, wenn die Ausfuhrungseinheiten ohne Taktversatz arbeiten und der Bitflip wird in beiden Ausführungseinheiten versetzt entsprechend einem vorgebbaren Taktversatz angezeigt wird, wenn die Ausführungseinheiten mit diesem Taktversatz arbeiten.

Dadurch behebt der von uns vorgeschlagene Mechanismus einen transienten Fehler innerhalb weniger Taktzyklen.

Weitere Vorteile und vorteilhafte Ausgestaltungen ergeben sich aus der Beschreibung und den Merkmalen der Ansprüche oder sind in der Beschreibung explizit genannt.

### Zeichnung

Die Erfindung wird nachfolgend anhand der in der Zeichnung dargestellten Figuren näher dargestellt. Dabei zeigt
Figur 1 ein beispielhaftes Dual-Core Prozessorsystem.
Figur 2 offenbart die Erfmdung anhand eines Dual-Core Prozessors mit Registeraufteilung.
Figur 3 zeigt die Erfindung anhand eines Dual-Core Prozessors mit Registeraufteilung und Zurückrollfähigkeit der Register ohne Taktversatz.
Figur 4 zeigt ein erfindungsgemäßes Einzelregister mit Zurückrollfähigkeit und einem Puffer.
Figur 5 zeigt ein erfindungsgemäßes Registerfile mit Zurückrollfähigkeit und je einem Puffer für Adresse und Daten.
Figur 6 offenbart ein Dual-Core System zur Darstellung der Bitflipbehebung bei Prozessoren ohne Taktversatz.
Figur 7 zeigt eine Anordnung zur Pufferung der Ausgänge bei einem erfindungsgemäßen Gegenstand.
Figur 8 zeigt die Erfindung nun anhand eines Dual-Core Prozessors mit Registeraufteilung und Zurückrollfähigkeit der Register mit Taktversatz.
Figur 9 zeigt ein erfindungsgemäßes Einzelregister mit Zurückrollfähigkeit und zwei Puffern sowie Rücksetzen der Valid Bits durch UND Gatter.
Figur 10 zeigt ein erfindungsgemäßes Einzelregister mit Zurückrollfähigkeit und zwei Puffern sowie Rücksetzen der Valid Bits durch Reset.
Figur 11 zeigt ein erfindungsgemäßes Registerfile mit Zurückrollfähigkeit und zwei Puffern sowie Rücksetzen der Valid Bits durch UND Gatter.

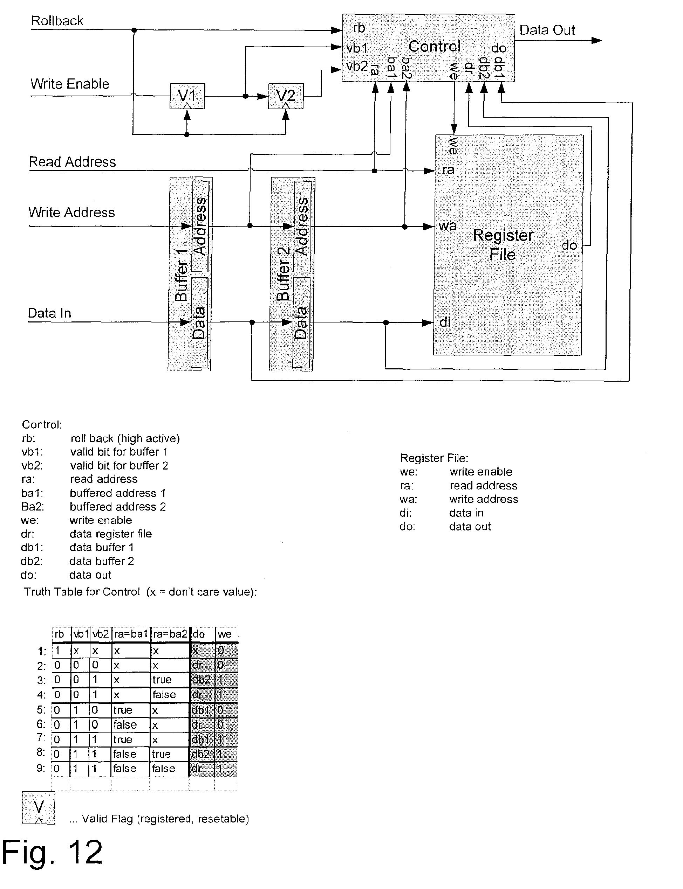

Figur 12 zeigt ein erfindungsgemäßes Registerfile mit Zurückrollfähigkeit und zwei Puffern sowie Rücksetzen der Valid Bits durch Reset.
Figur 13 offenbart ein Dual-Core System zur Darstellung der Bitflipbehebung bei Prozessoren mit Taktversatz.
Figur 14 schließlich zeigt das Auslösen des Trap RET für Parity Fehler im Checker als Instruktionsdiagramm

### Beschreibung der Ausführungsbeispiele

Wir stellen zwei Versionen unseres Recovery-Mechanismus vor. In der ersten Version "*Basic Instruction Retry Mechanismus"* (BIRM) werden die *Essential Registers* davor geschützt, mit fehlerhaften Daten beschrieben zu werden (Die Daten werden überprüft bevor sie geschrieben werden). Gültige Inhalte in den *Essential Registers* reichen aus, um zu jedem Zeitpunkt einen gültigen Gesamtprozessorzustand herzustellen (die Inhalte der *Derivable Registers* können aus den *Essential Registers* abgeleitet werden).

Aus Performanzgründen erweitern wir in der zweiten Version "*Improved Instruction Retry Mechanismus"* (IIRM) die *Essential Registers* mit Rollbackfähigkeit und lassen zu, dass fehlerhafte Werte erst dann erkannt werden, wenn sie bereits in die *Essential Registers* geschrieben wurden (Die Fehlererkennung arbeitet hier parallel zum Schreiben der Daten). Das Zurückrollen geschieht in IIRM in zwei Schritten: Zuerst werden alle *Essential Registers* zu einem gültigen Zustand zurückgerollt. Im zweiten Schritt werden die *Derivable Registers* mit den abgeleiteten Werten befüllt. Das Wiederbefiillen der *Derivable Registers* wird in beiden Versionen durch den in den meisten Prozessoren schon vorhandenen Trap/Exception Mechanismus (Anforderungen an den Mechanismus werden in Kapitel 4 beschrieben) bewerkstelligt.

Die Erfindung verringert den Hardware Overhead gegenüber bekannter (Micro-) Rollbacktechniken auf Grund folgender Punkte:
- Die einzigen Register, die vor fehlerhaften Werten geschützt, bzw. mit Rollbackfähigkeit (also mit Buffern) ausgestattet werden müssen, sind die *Essential Registers.*
- Die Menge der *Essential Registers* wächst nicht in zwingender Weise mit der Komplexität (z.B. Anzahl der Pipelinestufen) des Prozessors.
- Für das Herleiten der Registerinhalte der *Derivable Registers* wird der in den meisten Prozessorarchitekturen schon vorhandene Trap-Mechanismus verwendet und somit keine zusätzliche Hardware benötigt.

Im Gegensatz zum Stand der Technik wird in der von uns vorgeschlagenen Architektur, die Synchronität zwischen Master und Checker durch Recovery-Operationen nicht zerstört.

Dabei wird zunächst eine im Lockstep Mode arbeitende, d.h. taktsynchron arbeitende Dual Core Architektur beschrieben, die fähig ist, interne transiente Fehler innerhalb weniger Takte selbstständig zu beheben. Um eine genaue Fehlerdiagnose zu ermöglichen, sind zusätzliche interne Komparatoren in den Dual Core integriert. Ein Großteil der transienten Fehler kann dabei durch das Wiederholen von Instruktionen, in denen der Fehler aufgetreten ist, behoben werden. Zur Instruktionswiederholung kann bei dem beschriebenen Ansatz der in den üblichen Prozessoren schon vorhandene Trap/Exception Mechanismus verwendet werden und somit kein zusätzlicher Hardware Overhead verursacht.

Fehler, die durch Bit Flips im Register File entstehen, können im allgemeinen durch Instruktionswiederholung nicht behoben werden. Solche Fehler werden z.B. durch Parity verlässlich erkannt, und durch einen speziellen Trap an das Betriebssystem gemeldet. Die gelieferte Fehlerinformation wird als präzise bezeichnet, was bedeutet, dass dem Betriebssystem auch mitgeteilt wird, welche Instruktion den fehlerhaften Registerwert zu lesen versuchte. Somit kann das Betriebssystem eine angemessene Aktion zur Fehlerbehebung anstoßen. Beispiele für mögliche Aktionen sind unter anderem das Aufrufen eines Task spezifischen Error Handlers, das Wiederholen des betroffen Tasks oder das Neustarten des kompletten Prozessors bei einem nicht behebbaren Fehler (z.B. Fehler in den Speicherstrukturen des Betriebssystems)

Die Erfindung beschreibt somit ein Verfahren, eine Vorrichtung und einen Prozessor, der fähig ist, transiente Fehler zuverlässig zu erkennen und innerhalb weniger Taktzyklen zu beheben. Der Prozessor ist als Dual-Core ausgeführt. Er besteht aus zwei CPUs (Master und Checker), die beide das gleiche Programm parallel abarbeiten. Fehlererkennung wird über den Vergleich verschiedener ausgesuchter Signale des Masters und des Checkers realisiert. Transiente Fehler werden hauptsächlich durch Instruktionswiederholung behoben. Bit Flips im Registerfile werden durch Parity Checking erkannt und an das Betriebssystem gemeldet. Der Mechanismus zur Instruktionswiederholung wird wie gesagt in zwei Varianten beschrieben: Die erste Variante namens "*Basic Instruction Retry Mechanism"* (BIRM) ist auf minimalen Hardware Overhead ausgelegt, kann aber in manchen Architekturen die Performanz des Prozessors negativ beeinflussen. Die zweite Variante namens "*Improved Instruction Retry Mechanism"* (IIRM) bringt weiniger Performanzeinbussen mit sich, verursacht dafür aber einen größeren Hardware Overhead.

Zum einen werden dabei Dual-Core Prozessoren eingesetzt die im Lockstep Mode arbeiten. Der Begriff Lockstep Mode bedeutet hier, das beide CPUs (Master und Checker) taktsynchron zueinander laufen, und zum gleichen Zeitpunkt dieselbe Instruktion abarbeiten. Der Lockstep Mode stellt dabei zwar eine unkomplizierte und kostengünstige Variante dar, einen Dual Core Prozessor zu implementieren, bringt aber auch eine erhöhte Anfälligkeit des Prozessors für Common Mode Fehler mit sich. Unter Common Mode Fehler verstehen wir Fehler die in verschiedenen Teilkomponenten eines Systems gleichzeitig auftreten, sich auf die gleiche Art und Weise auswirken und durch dieselbe Störung verursacht wurden. Da bei einem Dual Core Prozessor beide CPUs in einem gemeinsamen Gehäuse untergebracht sind und von einer gemeinsamen Spannungsquelle versorgt werden, können sich bestimmte Störungen (z.B. Spannungsschwankungen) auf beide CPUs gleichzeitig auswirken. Wenn sich nun beide CPUs in exakt dem gleichen Zustand befinden, was im Lockstep Betrieb stets der Fall ist, ist die Wahrscheinlichkeit, dass sich die Störung auch auf exakt die gleiche Art und Weise in beiden CPUs auswirkt, nicht zu vernachlässigen. Ein solcher Fehler (Common Mode Fehler) würde durch einen Komparator nicht erkannt werden, da sowohl der Master als auch der Checker das gleiche falsche Resultat liefern würden.

Die Erfindung beschreibt also einen Prozessor der fähig ist, transiente Fehler zuverlässig zu erkennen und innerhalb weniger Taktzyklen zu beheben. Der Prozessor ist als Dual Core ausgeführt. Er besteht aus zwei CPUs (Master und Checker) die beide das gleiche Programm parallel abarbeiten. Fehlererkennung wird über den Vergleich verschiedener ausgesuchter Signale des Masters und des Checkers realisiert. Um die Anfälligkeit für Common Mode Fehler zu verringern, arbeiten Master und Checker mit Taktversatz, was bedeutet, dass der Checker dem Master stets um eine definierten Zeitabstand (z.B. 1,5 Takte). Hinterherläuft (Die beiden CPUs befmden sich also zu keinen Zeitpunkt im gleichen Zustand). Dies hat zur Folge, dass die Resultate des Masters erst nach dieser definierten Zeitspanne durch den Komparator überprüft werden können, da erst dann die korrespondierenden Signale des Checker bereitgestellt werden. Die Resultate des Masters können somit erst dann überprüft werden wenn die Resultate des Checkers bereitstehen und müssen zwischenzeitlich gepuffert, das heißt zwischengespeichert, werden.

Diese beiden Beispiele der Architektur mit Taktversatz und ohne Taktversatz veranbschaulichen auch die Vielfältigen Einsatzmöglichkeiten des Gegensatndes unserer Erfindung. Im Weiteren werden beide Beispiele vorgestellt, wobei keine strikte Trennung im Hinblick auf den erfindungsgemäßen Gegenstand und dazu aufgezeigte Aussagen sowie Darstellungen vorgenommen werden soll. So sind die Beispiele entsprechend aller 14 Figuren erfindungsgemäß beliebig kombinierbar.

Wird ein Fehler erkannt, so wird quasi der gesamte Dual Core zu einem Zustand vor dem Auftreten des Fehlers zurückgerollt von dem aus die Programmausführung fortgesetzt wird ohne einen Neustart oder ein Abschalten durchführen zu müssen.

Die nachfolgende Beschreibung mit den Abbildungen zeigt unter anderem, wie ein Recovery-Mechanismus in einen Dual-Core Prozessor integriert werden kann. Dabei dient die verwendete Architektur als Beispielarchitektur (Der Einsatz des erfindungsgemäßen Recovery-Mechanismus ist z.B. nicht an eine dreistufige Pipeline gebunden). Die einzige Anforderung, die an die Prozessorarchitektur gestellt wird, ist die, dass es sich um eine Pipeline-Architektur handelt, die einen Mechanismus, insbesondere Exception/Trap-Mechanismus besitzt, der die Anforderungen erfüllt. Die Kontrollsignale (z.B. write enable, read enable, usw.) die zur I/O führen werden in allen Figuren allgemein mit Control bezeichnet.

### Instruktionswiederholung

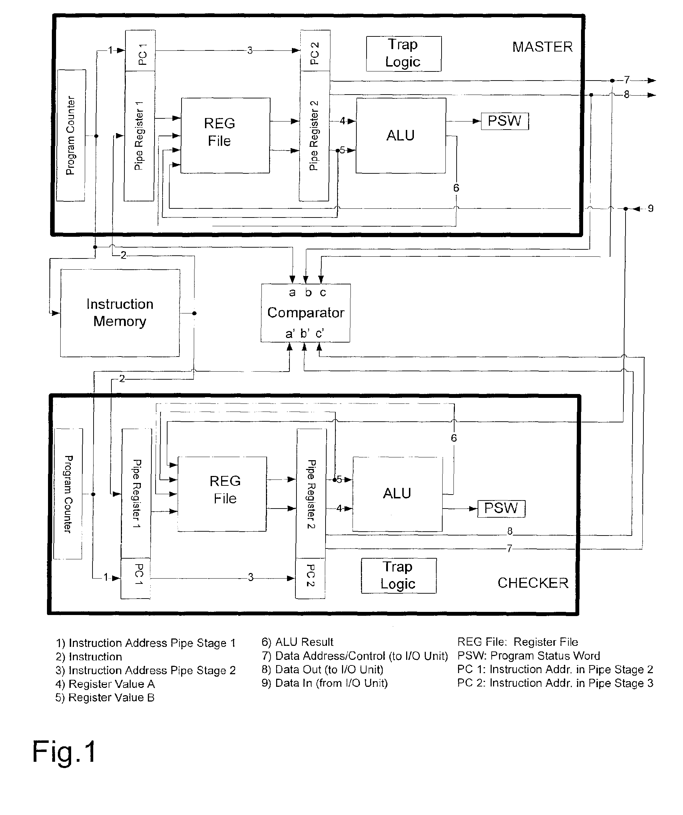

In Figur 1 in einer Beispielarchitektur für einen Dual Core Prozessor vergleicht ein Komparator dabei die Ausgänge (Instruktionsadresse, Data Out, Kontrollsignale) beider Cores (alle Vergleiche finden parallel statt):
a: Instruktionsadresse (Ohne eine Überprüfung der Instruktionsadresse könnte der Master unbemerkt eine falsche Instruktion adressieren, die dann in beiden Prozessoren unerkannt abgearbeitet werden würde.)
b: Data Out
c: Kontrollsignale wie Write Enable oder Read Enable

Der Fehler wird nach außen signalisiert und führt heir nun nicht zum Abschalten des betroffenen Steuergerätes. Da bei transienten Fehlern keine Schädigung des Rechners vorliegt, wird nun der Rechner möglichst schnell wieder der Anwendung zur Verfiigung gestellt, ohne dass das System abschaltet oder ein Neustart erfolgen muss.

Der erfindungsgemäße Recovery-Mechanismus basiert auf Fehlererkennung und Instruktionswiederholung. Wenn ein Fehler in irgendeiner beliebigen Pipeline Stufe erkannt wird, wird prinzipiell die Instruktion in der letzten Pipelinestufe wiederholt. Das Wiederholen einer Instruktion in der letzten Pipelinestufe hat zur Folge, dass auch alle anderen Instruktionen in den vorderen Pipeline Stufen (die nachfolgenden Instruktionen) wiederholt werden, wodurch die komplette Pipeline wieder mit neuen Werten gefüllt wird. Die Instruktionswiederholung wird hierbei, durch den in den meisten üblichen Prozessoren schon vorhanden, Trap-(Exception) Mechanismus durchgeführt.

Der Trap- (Exception) Mechanismus muss dabei folgenden Anforderungen genügen: Sobald ein Trap getriggert wird, wird jede Instruktion, die sich zu diesem Zeitpunkt in der Pipeline des Prozessors befindet, daran gehindert, den Prozessorzustand zu verändern. Externen Schreibzugriffe (z.B. auf den Datenspeicher, auf Zusatzmodule wie Netzwerkschnittstellen oder D/A Wandler, ...) werden ebenfalls unterbunden. Im nachfolgenden Takt wird in eine, dem Trap zugeordnete Trap-Routine gesprungen. Eine Trap-Routine kann durch den Befehl "Return from Trap-Routine" wieder verlassen werden, was dazu führt, dass die Ausführung wieder bei der Instruktion fortgesetzt wird, die sich zum Zeitpunkt des Auslösens des Traps in der letzten Pipeline Stufe befunden hat.

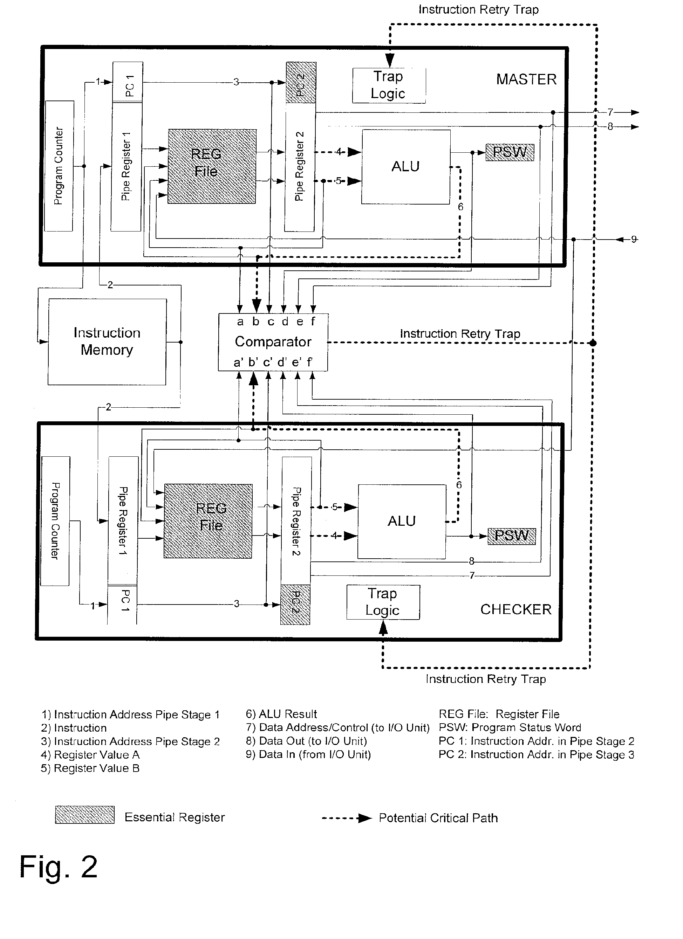

Um nun mit Hilfe des Trap-Mechanismus eine Instruktion zu wiederholen, wird einfach eine "leere" Trap-Routine aufgerufen (unter einer leeren Trap-Routine verstehen wir eine Routine, die ausschließlich aus dem Befehl "Return from Trap-Routine" besteht). Da es sich um eine "leere" Trap-Routine handelt, wird sie sofort nach ihrem Aufruf wieder verlassen. Die Pipeline wird geleert und die Ausführung genau bei der Instruktion wieder fortgesetzt, die sich zum Zeitpunkt des Auslösens des Traps in der letzten Pipelinestufe befand. Wir nennen diese leere Trap-Routine *Instruction Retry Trap.* Der *Instruction Retry Trap* kann nur dann einen gültigen Prozessorzustand herstellen, wenn bestimmte Register einen gültigen und konsistenten Inhalt aufweisen. Die Menge dieser Register wird *Essential Registers* genannt, und beinhaltet alle Register deren Inhalte nach einem Trap Aufruf den Prozessorzustand bestimmen. Dazu gehört in erster Linie das Registerfile, das Statusregister und je nach Architektur verschiedene Kontrollregister wie zum Beispiel eine Exception-Vector-Table. Das wichtigste Register der *Essential Registers* ist das Register, das die Adresse der Instruktion in der letzten Pipeline Stufe speichert, da beim Verlassen des Traps genau zu dieser Adresse gesprungen werden muss. Die *Essential Registers* werden in einer Beispielarchitektur in Figur 2 dargestellt (REG File: Register-File, PC 2: Adresse der Instruktion in der letzten Pipe Stufe, PSW: Statusregister).

Jeder fehlerhafte Wert, der in die *Essential Registers* geschrieben wird, muss zuverlässig als fehlerhaft erkannt werden. In der ersten Version des *Instruction Retry Mechanismus* (BIRM) werden alle Werte, die in die *Essential Registers* geschrieben werden, überprüft, bevor sie tatsächlich in die Register übernommen werden. Die Überprüfung der Werte geschieht mit Hilfe eines Komparators, der die Signale des Masters mit denen des Checkers in jedem Taktzyklus vergleicht (Figur 2). Der Komparator (Comparator in Figur 2) vergleicht jeweils Signal a mit a', b mit b', c mit c', ... (die Vergleiche finden parallel statt). Wenn mindestens ein Paar von zusammengehörenden Signalen nicht übereinstimmt, so triggert der Komparator noch im selben Taktzyklus den *Instruction Retry Trap.* Das führt dazu, dass die *Essential Registers* nicht mit fehlerhaften Werten beschrieben werden, und die fehlerhafte Instruktion wiederholt wird.

Das Diagram in Tabelle 1 zeigt die Funktion des *Basic Instruction Retry Mechanismus* (BIRM) anhand eines Beispiels. In dem Diagram (unter Instructions) wird gezeigt, in welcher Pipeline Stufe sich eine bestimmte Instruktion während eines bestimmten Taktes befindet.

**Tabelle 1 Beispielablauf des BIRM**

| Event | | | Transient Error in instruction F | | | Enter Trap | | Leave Trap | Resume Execution | | | |
|---|---|---|---|---|---|---|---|---|---|---|---|---|
| Clock Cycle | | 4 | 5 | 6 | 7 | 8 | 9 | 10 | 11 | 12 | 13 | 14 |
| Instructions | Instruction C | EX | | | | | | | | | | |
| | Instruction D | DEC | EX | | | | | | | | | |
| | Instruction E | IF | DEC | EX | | | | | | | | |
| | Instruction F | | IF | DEC | Stop by Tr | | | | IF | DEC | EX | |
| | Instruction G | | | IF | DEC | FLUSH | | | | IF | DEC | EX |
| | Instruction H | | | | IF | FLUSH | | | | | IF | DEC |
| | RTR | | | | | IF | DEC | EX | | | | |
| | don't care | | | | | | IF | DEC | FLUSH | | | |
| | don't care | | | | | | | IF | FLUSH | | | |
| Recovery takes place in cycles 8 - 13 | | | | | | | | | | | | |

| | | | | | | | | | | | | |
|---|---|---|---|---|---|---|---|---|---|---|---|---|
| Legend: - IF: Instruction Fetch - DEC: Decode - EX: Execute - RTR: Return from Trap Routine - Stop by Tr (Trap): If a synchronus trap is activated no new values are written to registers/buffers | | | | | | | | | | | | |

Es wird angenommen, dass ein transienter Fehler in irgendeiner Stufe der Instruktion F (Takt 5-7) auftritt. Spätestens in Takt 7 wird dieser Fehler durch den Komparator erkannt, die Instruktion F am Schreiben ihrer Resultate gehindert, und der *InstructionRetryTrap* getriggert. Der *InstructionRetryTrap* ist ein leerer Trap, und besteht daher nur aus dem "Return from Trap-Routine" (RTR) Befehl. Im Takt 10 hat die RTR Instruktion bereits die Execute Stufe erreicht, was dazu führt, dass im Takt 11 die zuvor fehlerhafte Instruktion F erneut gefetched wird. Am Beginn von Takt 14 wurde die Instruktion F vollständig wiederholt, und hat ihre korrekten Resultate geschrieben.

Der Nachteil des Basic IRM (BIRM) ist, dass der Komparator in vielen Architekturen im zeitkritischen Pfad liegen wird, da neue Werte erst dann in ein Register übernommen werden können, wenn sie bereits verglichen wurden. Die Berechnung neuer Daten durch die ALU, der Vergleich der Daten des Masters und des Checkers und das Auslösen des Trap-Mechanismus müssen also im gleichen Takt geschehen (Figur 2 zeigt den potentiell kritischen Pfad).

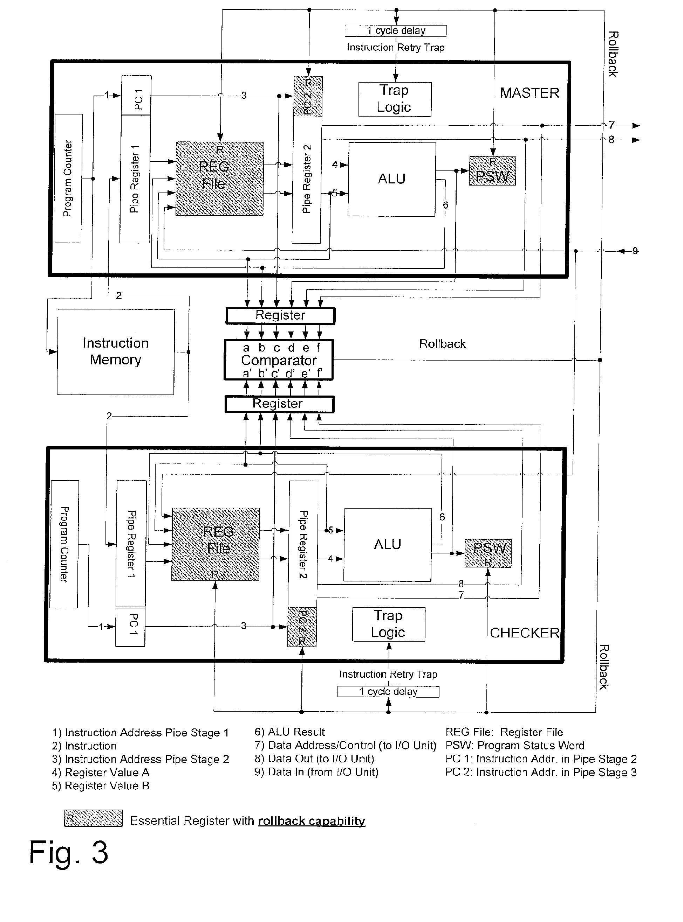

In der zweiten Version des *Instruction Retry Mechanismus* (IIRM) wurde folgende Strategie gewählt, um den zeitkritischen Pfad zu verkürzen (Figur 3). Die zu vergleichenden Signale werden zunächst in einem Register zwischengespeichert, und erst im darauf folgenden Takt verglichen. Der kritische Pfad des BIRM wird also bei IIRM in zwei kürzere Teile geteilt. Somit steht ein ganzer Takt für den Vergleich der Signale zwischen Master und Checker und für das Auslösen des Traps zur Verfügung, da nun der Komparator (Comparator) und die CPUs parallel arbeiten können. Natürlich wird bei dieser Methode ein Fehler erst dann erkannt, wenn bereits fehlerhafte Werte in die Register übernommen wurden. Um diesem Problem zu begegnen, werden beim IIRM die *Essential Registers* mit Rollbackfähigkeit ausgestattet. Wird ein Fehler erkannt, so werden die Register zuerst zu einem gültigen Zustand zurückgerollt (einen Takt), und danach der *Instruction Retry Trap* getriggert (Figur 3). Die "1 cycle delay" Komponente verzögert das Triggern des *Instruction Retry Trap* um einen Takt und sorgt somit dafür, dass der *Instruction Retry Trap* erst dann getriggert wird, wenn die Essential Registers bereits zurückgerollt sind.

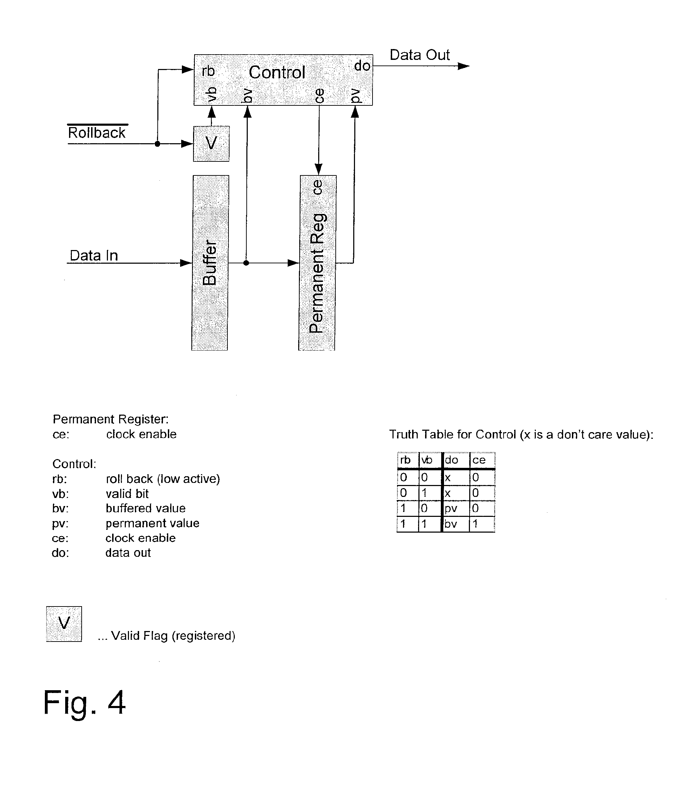

Figur 4 zeigt wie ein Einzelregister mit Rollback Fähigkeit ausgestattet werden kann (Bei den Registern PC 2 und PSW in Figur 3 handelt es sich um rollbackfähige Register). Ein rollbackfähiges Register besteht aus einem permanenten Register, einem Puffer, einem Valid-Bit und einer Kontrolllogik. Neue Daten werden nicht direkt in das permanente Register geschrieben, sondern zuerst in einem Puffer abgelegt. Falls das Rollback-Signal zum Zeitpunkt des Ablegens der Daten inaktiv ist (rb=1; rb ist low aktiv), wird der Pufferinhalt mittels eines Valid-Bits als gültig markiert (vb=1). Wenn zu Beginn des nächsten Taktes das Rollback-Signal immer noch inaktiv ist (also kein Rollback erfolgen soll), so wird der Inhalt des Puffers in das permanente Register übertragen (ce=1; Wenn *clock enable* aktiv ist übernimmt das Register mit der nächsten Taktflanke den anliegen Wert). Ist hingegen das Rollback-Signal aktiv (rb=0; Rollback soll erfolgen), behält das permanente Register seinen alten Wert (ce=0; Wenn *clock enable* inaktiv ist, behält das Register seinen aktuellen Wert), und der Pufferinhalt wird mittels des Valid-Bits als ungültig markiert (vb=0). Ein als ungültig markierter Pufferinhalt (vb=0) wird prinzipiell nicht in das permanente Register übernommen. Bei einem Lesezugriff wird im Falle eines als gültig markierten Puffers (vb=1) der Pufferinhalt (do=bv) zurückgegeben, im Falle eines als ungültige markierten Puffers (vb=0) wird der Inhalt des permanenten Registers (do=pv) zurückgegeben. Das gesamte Verhalten des Rollbackfähigen Registers wird durch die Kontrolleinheit gesteuert (das Verhalten der Kontrolleinheit ist durch die Wahrheitstabelle in Figur 4 spezifiziert).

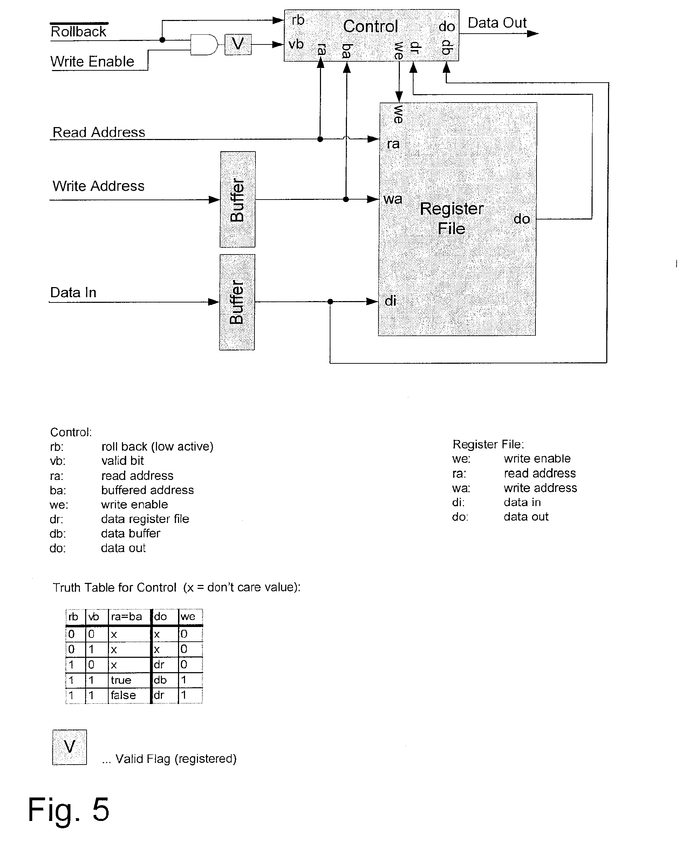

Figur 5 zeigt, wie ein ganzes Registerfile mit Rollbackfähigkeit ausgestattet werden kann (Bei dem Registerfile in Figur 3 handelt es sich um ein rollbackfähiges Registerfile). Ein Rollback fähiges Registerfile besteht aus dem Registerfile selbst, einem Datenpuffer, einem Adresspuffer, einem Valid-Bit und einer Kontrolllogik. Neue Daten werden nicht direkt in das Registerfile, sondern zuerst in den Datenpuffer geschrieben (die zugehörige Adresse wird in den Adresspuffer geschrieben). Falls das Rollback-Signal zum Zeitpunkt des Ablegens der Daten inaktiv ist (rb=1; rb ist low aktiv), wird der Pufferinhalt mittels eines Valid-Bits als gültig markiert (vb=1). Wenn zu Beginn des nächsten Taktes das Rollback-Signal immer noch inaktiv ist (also kein Rollback erfolgen soll), so wird der Inhalt des Puffers in das Registerfile übertragen (die Adressierung erfolgt durch die im Adresspuffer gespeicherte Adresse). Ist hingegen das Rollback-Signal aktiv (rb=0), wird kein neuer Wert in das Registerfile geschrieben, und die Pufferinhalte werden mittels des Valid-Bits als ungültig markiert (vb=0). Als ungültig markierte Pufferinhalte werden prinzipiell nicht in das Registerfile übertragen. Bei einem Lesezugriff wird im Falle eines als gültig markierten Puffers (vb=1) überprüft, ob die Adresse im Adress-Puffer mit der zu lesenden Adresse übereinstimmt (ra=ba). Ist das der Fall, so wird der Inhalt des Datenpuffers zurückgegeben (do=db), da dieser dem aktuellsten gültigen Wert an dieser Adresse entspricht (Ein gültiger Wert im Puffer ist aktueller als der entsprechende Wert im Registerfile). Stimmen die zu lesende Adresse und die Adresse im Adresspuffer nicht überein (ra ungleich ba), so befindet sich im Puffer keine aktuellere Version dieses Registerinhaltes als im Registerfile selbst. In diesem Fall wird der entsprechende Wert des Registerfiles zurückgegeben (do=dr). Bei einem ungültig markierten Pufferinhalt wird immer der entsprechende Wert aus dem Registerfile geliefert (do=dr). Das gesamte Verhalten des rollbackfähigen Registerfiles wird durch die Kontrolleinheit gesteuert (das Verhalten der Kontrolleinheit ist durch die Wahrheitstabelle in Figur 5 spezifiziert).

Das Diagram nach Tabelle 2 zeigt die Funktion des *Improved Instruction Retry Mechanismus* (IIRM) anhand eines Beispiels.

**Tabelle 2: Beispielablauf des IIRM**

| Event | | | Transient Error in instruction F | | | Compare/ Rollback | Trap Activation | Enter Trap | | Leave Trap | Resume Execution | | | |
|---|---|---|---|---|---|---|---|---|---|---|---|---|---|---|
| Clock Cycle | | 4 | 5 | 6 | 7 | 8 | 9 | 10 | 11 | 12 | 13 | 14 | 15 | 16 |
| Instructions | Instruction C | EX | | | | | | | | | | | | |
| | Instruction D | DEC | EX | | | | | | | | | | | |
| | Instruction E | IF | DEC | EX | | | | | | | | | | |
| | Instruction F | | IF | DEC | EX | | | | | | IF | DEC | EX | |
| | Instruction G | | | IF | DEC | Stop by RB | | | | | | IF | DEC | EX |
| | Instruction H | | | | IF | DEC | Stop by Tr | | | | | | IF | DEC |
| | Instruction I | | | | | IF | DEC | FLUSH | | | | | | |
| | Instruction J | | | | | | IF | FLUSH | | | | | | |
| | RTR | | | | | | | IF | DEC | EX | | | | |
| | don't care | | | | | | | | IF | DEC | FLUSH | | | |
| | don't care | | | | | | | | | IF | FLUSH | | | |
| | | | | | | | | | | | | | | |
| Register File | Buffer | B | C | D | E | F_faulty | iv | iv | iv | iv | iv | iv | iv | F_correct |
| | Last Stored Value | A | B | C | D | E | E | E | E | E | E | E | E | E |
| PSW | Buffer | B | C | D | E | F faulty | iv | dc | dc | dc | E | E | E | F correct |
| | Permanent | A | B | C | D | E | E | E | dc | dc | dc | E | E | E |
| PC in Pipe 2 | Buffer | C | D | E | F | G | iv | dc | dc | dc | F | F | F | G |
| | Permanent | B | C | D | E | F | F | F | dc | dc | dc | F | F | F |
| Recovery takes place in cycles 8 - 15 | | | | | | | | | | | | | | |

| | | | | | | | | | | | | | | |
|---|---|---|---|---|---|---|---|---|---|---|---|---|---|---|
| Legend: - IF: Instruction Fetch - DEC: Decode - EX: Execute - RTR: Return from Trap Routine - Stop by RB (Rollback): During rollback no new values are written to registers/buffers - Stop by Tr (Trap): If a synchronus trap is activated no new values are written to registers/buffers - iv (invalidated): After rollback the buffer is invalidated - dc (don't care): We don't care how these registers are used while a trap is processed - PSW: Program Status Word - PC in Pipe 2: Register that hold the adress of the actual instruction in the EX stage | | | | | | | | | | | | | | |

In dem oberen Teil der Tabelle 2 (unter Instructions) wird gezeigt, in welcher Pipeline Stufe sich eine bestimmte Instruktion während eines bestimmten Taktes befindet. Im unteren Teil des Diagrames werden die Inhalte der rollbackfähigen Register (Puffer und permanentes Register) während der einzelnen Takte aufgelistet. Für das rollbackfähige Registerfile wird für jeden Takt gezeigt, welcher Wert sich im Buffer befindet, und welcher Wert als letztes in das eigentliche Registerfile eingetragen wurde. Ein Wert wie A bzw. B bedeutet, dass es sich um ein Resultat der Instruktion A bzw. der Instruktion B handelt. Es wird angenommen, dass ein transienter Fehler in irgendeiner Stufe der Instruktion F (Takt 5-7) auftritt. Spätestens in Takt 8 wird dieser Fehler durch einen der Komparatoren erkannt, die nachfolgende Instruktion (G) am Schreiben ihrer Resultate gehindert, und Rollback getriggert. Am Beginn von Takt 9 sind bereits alle Register des *EssentialRegisterSet* zurückgerollt (die Buffer wurden als ungültig markiert, wodurch die Werte in den permanenten Registern zu den aktuellsten gültigen Werten werden), und der *InstructionRetryTrap* wird getriggert. Instruktion H wird durch den getriggerten Trap am Schreiben ihrer Resultate gehindert. Der *InstructionRetryTrap* ist ein leerer Trap, und besteht daher nur aus dem "Return from Trap-Routine" (RTR) Befehl. Im Takt 12 hat die RTR Instruktion bereits die Execute Stufe erreicht, was dazu führt, dass im Takt 13 die zuvor fehlerhafte Instruktion F erneut gefetched wird. Am Beginn von Takt 16 wurde die Instruktion F vollständig wiederholt, und hat ihre korrekten Resultate geschrieben.

### Externe Ausgänge

Der beschriebene Recovery Mechanismus muss dafür sorgen, dass transiente Fehler innerhalb des Dual Cores daran gehindert werden, bis zu den externen Komponenten (Cache, Datenspeicher, Zusatzmodule, ...) vorzudringen. Bei BIRM ist diese Bedingung implizit erfüllt, da der *InstructionRetryTrap* noch im selben Takt getriggert wird wenn Fehler auf den Ausgangsleitungen (Leitung 7 und 8 in Figur 2) sichtbar werden. Wie bei "Instruktionswiederholung" bereits erwähnt wurde, unterbindet der Trap Mechanismus jeglichen Schreibzugriff auf externe Komponenten wenn ein Trap getriggert wird.
Im Gegensatz zu BIRM wird bei der zweiten Version des Recovery Mechanismus (IIRM) ein Fehler erst dann erkannt, wenn die fehlerhaften Daten bereits geschrieben wurden. Um zu verhindern, dass fehlerhafte Daten in externe Komponenten gelangen, kann ein Puffer zwischen den Dual Core und die I/O Kontrolleinheit (I/O Control) des Systems geschalten werden. Neue Daten werden zunähst in den Puffer geschrieben, und somit um einen Takt verzögert bis die Überprüfung der Daten abgeschlossen ist. Korrekte Daten werden an die I/O Kontrolleinheit weitergegeben. Werden hingegen die Daten als fehlerhaft klassifiziert, so wird der Inhalt des Puffers mittels des Rollbacksignals als ungültig markiert. Das Ungültigmarkieren des Puffers kann dabei auf beliebige Art und Weise implementiert werden (z.B. Reset des Pufferregisters, Löschen des Write Enable Bits in den Kontrollsignalen zur I/O Kontrolleinheit, ...).

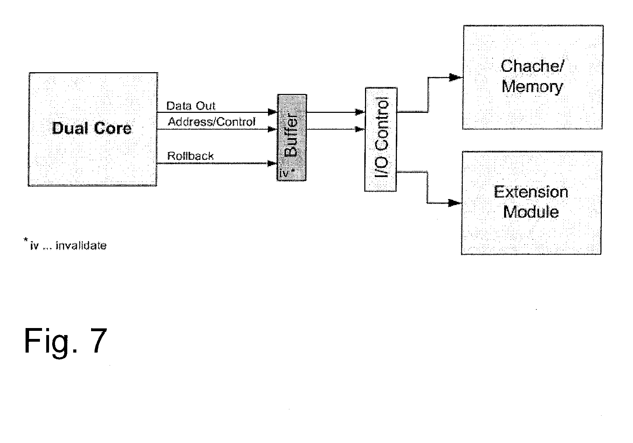

Figur 7 zeigt die Platzierung des Puffers zwischen dem Dual Core und der I/O Kontrolleinheit. In diesem Beispiel ist die I/O Kontrolleinheit mit einem Speicher samt Cache und einem beliebigen Erweiterungsmodul (z.B. D/A Wandler, Netzwerkschnittstelle, ...) verbunden.

### Permanente Fehler

Um permanente Fehler von transienten Fehlern unterscheiden zu können kann ein Fehlerzähler eingesetzt werden. Am sichersten ist die Verwendung einer unabhängigen Komponente, die durch das Überwachen der beiden vom Recovery Mechanismus verwendeten Trap-Leitungen (*InstructionRetryTrap* und *RegErrorTrap*) bzw der Rollback-Leitung die Fehlerhäufigkeit innerhalb eines bestimmten Zeitintervalls ermittelt. Überschreitet die Fehleranzahl pro Zeiteinheit einen gewissen Schwellwert kann der Fehler als permanent angesehen werden.

### Bitflips im Registerfile

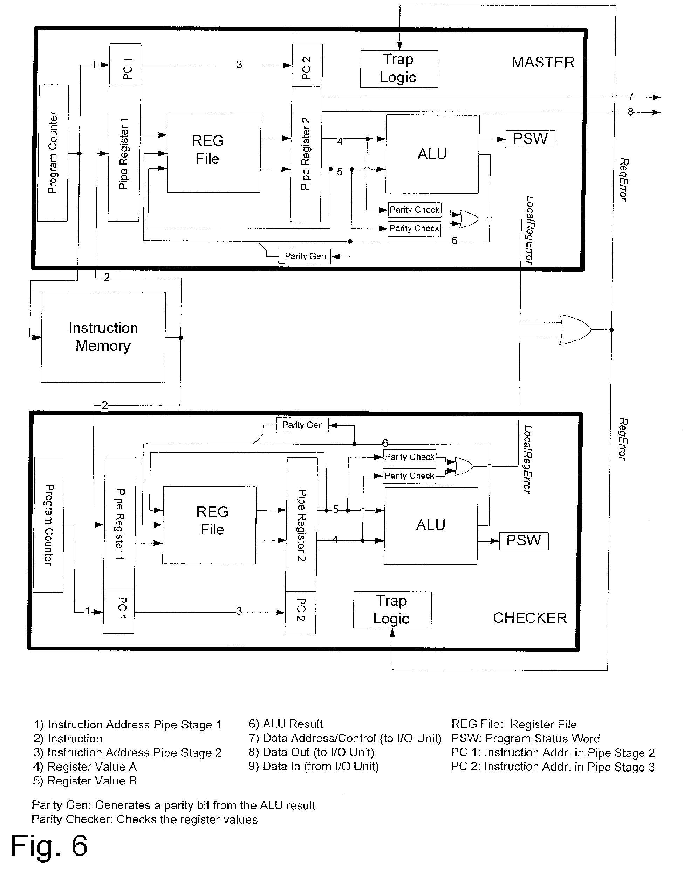

Durch Instruktionswiederholung kann natürlich nicht jeder transiente Fehler behoben werden. Fehler, die durch Bitflips im Registerfile entstehen, werden auch durch wiederholtes Auslesen nicht korrigiert. Um solche Fehler beheben zu können, wurde ein zusätzlicher Mechanismus integriert, der Registerfehler als solche erkennt, und dem Betriebssystem weitermeldet. Dabei werden alle Datenwerte im Registerfile mit Parity Bits abgesichert (das Parity Bit wird durch einen, der ALU nach geschalteten, Parity Generator generiert: Figur 6). Bei jedem Lesezugriff auf das Registerfile wird der ausgelesene Wert einem Parity Check unterzogen. Die Ausgänge aller Parity Checker einer CPU werden miteinander verknüpft, und bilden ein Signal Namens *LocalRegError*. Die *LocalRegError* Signale beider CPUs werden wiederum miteinander verknüpft und bilden das Signal *RegError*. Dieses Signal signalisiert, dass in mindestens einer der beiden CPUs ein Parity Fehler beim Auslesen eines Registerwertes erkannt wurde. In diesem Fall wird in beiden Cores eine Trap-Routine Namens *RegErrorTrap* ausgelöst, die das Betriebssystem über den Registerfehler informiert. Die Fehlerinformation, die dem Betriebssystem hier zur Verfügung gestellt wird, ist *präzise*, da in der Rücksprungadresse der Trap-Routine genau die Adresse der Instruktion gespeichert ist, die auf das fehlerhafte Register zugegriffen hat. Dadurch ist es dem Betriebssystem möglich, spezifisch zu reagieren (Wiederholung der betroffenen Task oder Aufruf eines spezifischen Error Handlers). Es ist von entscheidender Bedeutung, dass beide CPUs (auch die fehlerfreie) in die Trap-Routine springen, um die Synchronität zu erhalten.

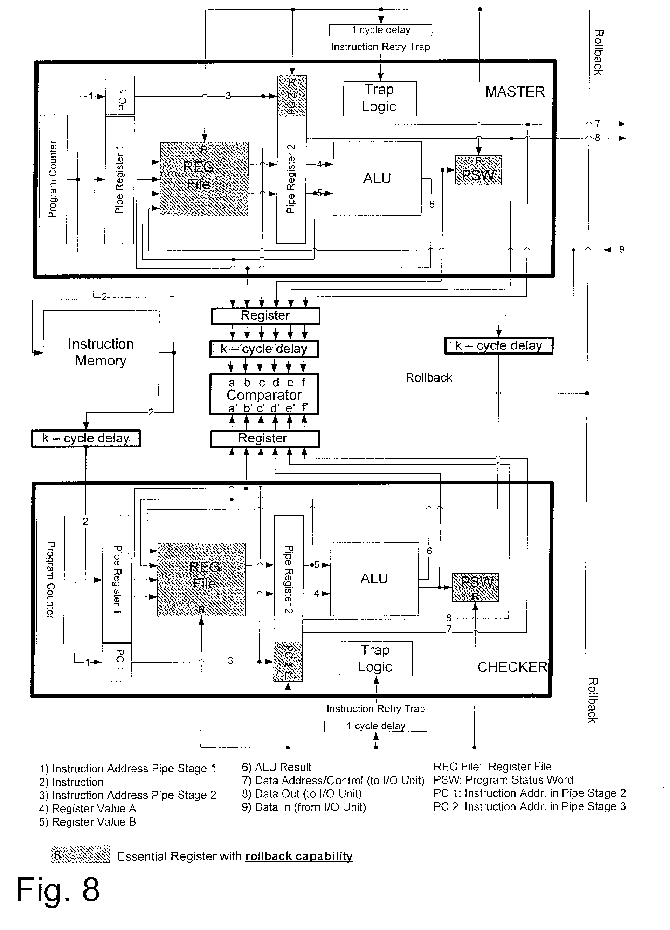

Der beschriebene Recovery Mechanismus basiert grundsätzlich auf Fehlererkennung durch den Vergleich der Ausgangssignale des Masters und des Checkers, und auf Fehlerbehebung durch Instruktionswiederholung. Master und Checker arbeiten nun beispielsweise mit Taktversatz, wobei der Checker dem Master stets um einen definierten Zeitabstand hinterherläuft (k Takte, wobei k eine reelle Zahl ist). Vorzugsweise besteht der Zeitabstand aus einer definierten Anzahl von ganzen Takten bzw. eine definierte Anzahl von halben Takten. Um einen Vergleich zu ermöglichen, müssen die Ausgangssignale des Masters, durch entsprechende Verzögerungskomponenten, solange zwischengespeichert werden, bis die korrespondierenden Ausgangssignale des Checkers bereit stehen. Figur 8 zeigt die Platzierung der Verzögerungskomponenten ("k-delay") in dem beschriebenen fehlertoleranten Dual Core Prozessor. Die zu vergleichenden Signale des Masters werden durch die Verzögerungskomponente "k-delay" um k Takte verzögert, bevor sie zum Komparator ("Comparator") gelangen. Da der Checker dem Master hinterherläuft, muss der Checker natürlich auch seine Eingangssignale in Relation zum Master verzögert erhalten. Für die Verzögerung der Instruktion und der von der I/O Einheit gelieferten Eingangsdaten sorgen ebenfalls Verzögerungskomponenten.
Die zu vergleichenden Signale werden nicht direkt vom Master bzw. Checker zur Verzögerungskomponente ("k-delay") bzw. zum Komparator ("Comparator") geführt, sondern vorerst in einem Register zwischengespeichert. Dadurch steht für den Vergleich der Signale und das Auslösen der Instruktionswiederholung ein kompletter Takt zur Verfiigung, und das Timing der CPUs wird durch den Komparator nicht negativ beeinflusst. Durch die Zwischenspeicherung in den Registern verlängert sich die Fehlererkennungszeit um einen zusätzlichen Takt. Die Fehlererkennungszeit ergibt sich aus dem Taktversatz zwischen Master und Checker und dem, durch die Register implizierten, zusätzlichen Takt (Fehlererkennungszeit = k + 1).

### Zurückrollen des Prozessorzustandes

Das Zurückrollen des Prozessorzustandes geschieht auf Instruktionsebene und wird durch einen Mechanismus Namens "Instruction Retry Mechanism" (IRM) bewerkstelligt. Das Ziel des IRM ist es, den gesamten Prozessor in einen Zustand zurückzurollen in dem er sich vor dem Auftreten des Fehlers befunden hat. Der Mechanismus benutzt hierbei hauptsächlich den in üblichen Prozessoren schon vorhanden Trap (Exception) Mechanismus.

Der Trap (Exception) Mechanismus muss dabei folgenden Anforderungen genügen: Sobald ein Trap getriggert wird, wird jede Instruktion, die sich zu diesem Zeitpunkt in der Pipeline des Prozessors befmdet, daran gehindert, den Prozessorzustand zu verändern. Im nachfolgenden Takt wird in eine dem Trap zugeordnete Trap Routine gesprungen. Eine Trap Routine kann durch einen "Return from Trap Routine" (RTR) Befehl wieder verlassen werden, was dazu führt, dass die Ausführung wieder bei der Instruktion fortgesetzt wird, die sich zum Zeitpunkt des Auslösens des Traps in der letzten Pipeline Stufe befunden hat.

Um nun mit Hilfe des Trap Mechanismus eine Instruktion zu wiederholen, wird einfach eine "leere" Trap Routine aufgerufen (unter einer leeren Trap Routine verstehen wir eine Routine die ausschließlich aus dem Befehl "Return from Trap Routine" besteht). Da es sich um eine "leere" Trap Routine handelt, wird sie sofort nach ihrem Aufruf wieder verlassen. Die Pipeline wird geleert und die Ausführung genau bei der Instruktion wieder fortgesetzt, die sich zum Zeitpunkt des Auslösens des Traps in der letzten Pipelinestufe befand. Wir nennen diese leere Trap Routine *InstructionRetryTrap*.
Der *InstructionRetryTrap* kann nur dann einen gültigen Prozessorzustand herstellen, wenn bestimmte Register einen gültigen und konsistenten Inhalt aufweisen. Die Menge dieser Register wird *Essential Registers* genannt und beinhaltet alle Register deren Inhalt bei einem Trap Aufruf gesichert oder beibehalten werden muss. Dazu gehört in erster Linie das Registerfile, das Statusregister und je nach Architektur verschiedene Kontrollregister wie zum Beispiel eine Exception Vector Table. Das wichtigste Register der *Essential Registers* ist das Register das die Adresse der Instruktion in der letzten Pipeline Stufe speichert, da beim Verlassen des Traps genau zu dieser Adresse gesprungen werden muss. Die *Essential Register* werden in einer Beispielarchitektur in Figur 8 dargestellt (REG File: Register File, PC 2: Adresse der Instruktion in der letzten Pipe Stufe, PSW: Statusregister). Alle Register die nicht zu den Essential Registers gehören, werden *Derivable Register* genannt, da deren Inhalte mit Hilfe des *InstructionRetryTrap* hergeleitet werden können (Sie werden durch den Trap zuerst geleert und durch die nachfolgende Programmausführung wieder mit gültigen Werten befüllt).

Um also eine korrekte Funktion des *InstructionRetryTrap* gewährleisten zu können, müssen zuvor alle Fehler in den Essential Registers erkannt und behoben werden. Die Fehlererkennung wird durch den Vergleich der Schreibzugriffe des Masters und denen des Checkers auf die Essential Registers erreicht (Der Vergleich erfolgt durch die "Comparator" Komponente). Wie schon weiter oben erwähnt, beträgt bei einem Dual Core mit Zeitversatz die Fehlererkennungszeit k+1 Takte. Daher müssen nach einem erkannten Fehler, die Essential Registers k+1 Takte zurückgerollt werden, um wieder einen gültigen Zustand zu erhalten.

Dies wird möglich in dem die *Essential Register* mit Rollbackfähigkeit (siehe nächster Abschnitt) erweitert werden. Wie schon erwähnt, ist ein gültiger Zustand in den *Essential Register* eine notwendige und hinreichende Vorbedingung, um einen kompletten gültigen Prozessorzustand mit Hilfe des *InstructionRetryTrap* herstellen zu können (Die *Derivable Register* müssen also nicht mit Rollbackfähigkeit ausgestattet sein).

### Zurückrollen der Essential Registers

In diesem Abschnitt wird beschrieben, wie ein einzelnes Register oder ein komplettes Registerfile mit einer Rollbackfähigkeit ausgestattet werden kann, die es erlaubt, das Register bzw. das Registerfile um eine bestimmte Anzahl von Takten zurückzurollen.

### Einzelregister

Dieser Abschnitt zeigt wie ein Einzelregister, das in jedem Takt beschrieben wird (z.B. Piperegister), mit Rollbackfähigkeit ausgestattet werden kann. Ein rollbackfähiges Einzelregister besteht aus einer Kontrolllogik, einem permanenten Register und aus einem oder mehreren temporären Puffern. Die zu speichernden Daten durchlaufen dabei vorerst die temporären Puffer, bevor sie in das permanente Register übernommen werden. Um ein Rollback durchzuführen, werden alle Pufferinhalte als ungültig markiert. Ungültig markierte Pufferinhalte werden prinzipiell nicht in das permanente Register übernommen. Die Anzahl der temporären Puffer entspricht dabei der Anzahl der Takte, um die das Register bei einem Rollback zurückgerollt wird. Beim Auslesen des Registers ist zu beachten, dass immer der aktuellste gültige Wert zurückgeliefert werden muss. Wenn kein Rollback stattgefunden hat, die Puffer also als gültig markiert sind, befindet sich der aktuellste gültige Wert immer im ersten Puffer. Unmittelbar nach einem Rollback befindet sich der aktuellste gültige Wert im permanenten Register.

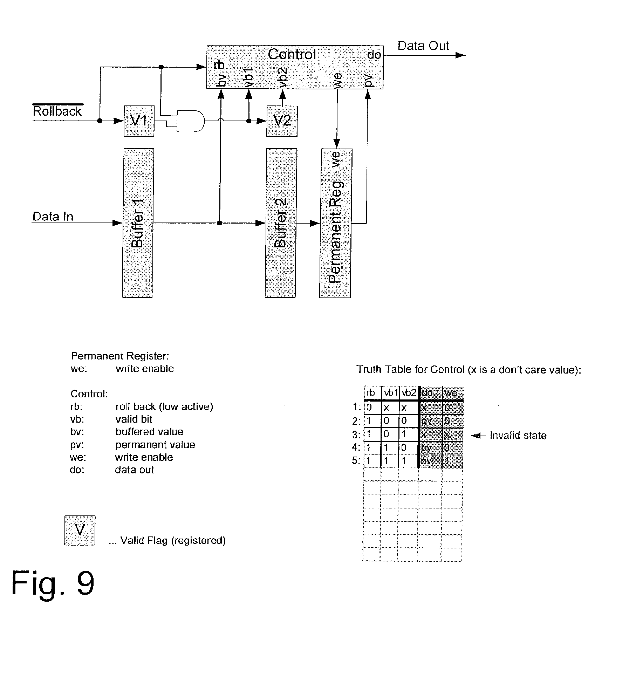

In Figur 9 wird als Beispiel ein rollbackfähiges Register skizziert, das um 2 Takte zurückgerollt werden kann, also 2 temporäre Puffer ("Buffer 1" und "Buffer 2") und zwei dazugehörige Valid Bits ("V1" und "V2") besitzt. Das permanente Register, die temporären Puffer und die Valid Bits werden getaktet, wohingegen die Kontrolllogik als asynchroner Logikblock realisiert ist. Mit jeder Taktflanke werden die anliegenden Daten in den "Buffer 1" übernommen, und der alte Inhalt vom "Buffer 1" in den "Buffer 2" verschoben. Bei inaktivem Rollbacksignal wird bei jeder Taktflanke der neue Wert des ersten Valid Bits ("V1") auf gültig gesetzt und der alte Wert von "V1" nach "V2" verschoben. Der Inhalt des "Buffer 2" wird nur dann in das permanente Register übernommen, wenn das Rollbacksignal inaktiv ist, und "V2" auf gültig gesetzt ist.
Um ein Rollback durchzuführen, wird das Rollbacksignal auf aktiv gesetzt, was dazu führt, dass bei der nächsten Taktflanke die beiden Valid Bits ("V1" und "V2") auf ungültig gesetzt werden, und das permanente Register seinen aktuellen Wert beibehält. Bei Lesezugriffen wird der aktuellste gültige Wert folgendermaßen ermittelt: Wenn "V1" auf gültig gesetzt ist, so stellt der Inhalt von "Buffer 1" den aktuellsten gültigen Wert dar. Ist "V1" auf ungültig gesetzt, so hat im letzten Takt ein Rollback stattgefunden, und die aktuellsten gültigen Daten müssen aus dem permanenten Register gelesen werden. Der Fall, dass der Buffer 2 den aktuellsten gültigen Wert enthält, kann niemals vorkommen, da bei einem Rollback immer "Buffer 1" und "Buffer 2" gemeinsam als ungültig markiert werden, und "Buffer 1" als erstes wieder mit gültigen Werten befüllt wird ("V1" = ungültig und "V2" = gültig kann bei einem Register, das in jedem Takt beschrieben wird, niemals vorkommen).

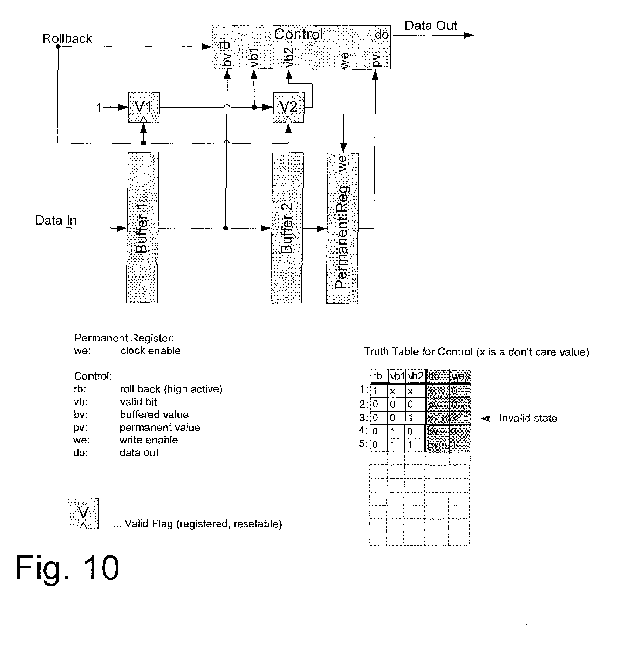

Das gesamte Verhalten des rollbackfähigen Registers wird durch die Kontrolleinheit gesteuert. Das Verhalten der Kontrolleinheit ist durch die Wahrheitstabelle in Figur 9 und 10 spezifiziert. In Figur 9 erfolgt das Rücksetzen des Valid Bits dabei mittels UND-Gatter in Figur 10 mittels Reset:
1. Wenn das Rollback Signal aktiv ist (also rb=0 da Rollback ein low-aktives Signal ist) wird prinzipiell kein neuer Wert in das permanente Register übernommen (we=0). Am Ausgang darf ein beliebiger Wert anliegen.
2. Wenn das Rollback Signal inaktiv (rb=1) ist, und beide Puffer als ungültig markiert (vb1=0,vb2=0) sind, wird kein neuer Wert in das permanente Register übernommen (we=0). Am Ausgang muss dann der Wert des permanenten Registers anliegen (do=pv).
3. Der Zustand in dem bei inaktivem Rollback Signal (rb=1) der erste Puffer keinen gültigen Wert enthält (vb1=0), der zweite aber schon (vb2=1) kann niemals auftreten. Nach einem Rollback werden immer beide Valid Bits auf 0 gesetzt. Danach wird immer zuerst das erste Valid Bit als gültig markiert (vb1=1). Wenn später wieder ein Rollback erfolgt werden wieder alle beide Valid Bits auf als ungültig markiert (vb1=0,vb2=0).
4. Wenn bei inaktivem Rollback (rb=1), der erste Puffer als gültig (vb1=1) und der zweite Puffer als ungültig (vb2=0) markiert ist, so wird kein neuer Wert in das permanente Register übernommen (we=0). Der Wert des ersten Puffers liegt dann am Ausgang an (do=bv).
5. Wenn bei inaktivem Rollback (rb=1), der erste und zweite Puffer als gültig markiert ist (vb1=1, vb2=1), so werden die Daten des zweiten Puffers in das permanente Register übernommen (we=1). Der Wert des ersten Puffers liegt dann am Ausgang an (do=bv).

### Registerfile

Dieser Abschnitt zeigt wie ein Registerfile, das im Gegensatz zu dem zuvor beschriebenen Einzelregister nicht unbedingt in jedem Takt beschrieben wird, mit Rollbackfähigkeit ausgestattet werden kann. Ein rollbackfähiges Registerfile besteht aus einer Kontrolllogik, dem Registerfile selbst und einem oder mehreren temporären Puffern die jeweils ein Datenwort und eine Registeradresse speichern können. Die zu speichernden Daten durchlaufen gemeinsam mit den dazugehörigen Adressen vorerst die temporären Puffer bevor sie in das Registerfile übernommen werden. Um ein Rollback durchzuführen, werden alle Pufferinhalte als ungültig markiert. Ungültig markierte Pufferinhalte werden prinzipiell nicht in das Registerfile übernommen. Die Anzahl der temporären Puffer entspricht dabei der Anzahl der Takte, um die das Registerfile bei einem Rollback zurückgerollt wird. Beim Auslesen des Registerfiles ist zu beachten, dass immer der aktuellste gültige Wert ausgelesen wird. Dieser befindet sich im ersten gültigen Puffer der die gewünschte Adresse enthält. Enthält kein gültiger temporärer Puffer die gewünschte Adresse, oder sind alle temporären Puffer als ungültig markiert, wird immer direkt aus dem Registerfile gelesen.

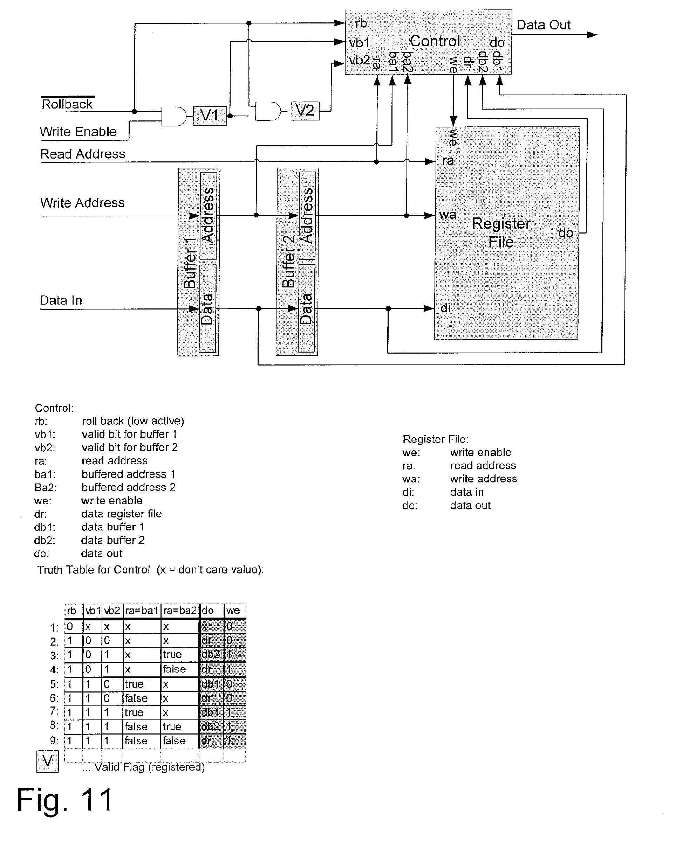

In Figur 11 wird als Beispiel ein rollbackfähiges Registerfile skizziert, das um 2 Takte zurückgerollt werden kann, also 2 temporäre Puffer ("Buffer 1" und "Buffer 2") mit zwei dazugehörigen Vaild Bits ("V1" und "V2") besitzt. Das Registerfile selbst, die temporären Puffer und die Valid Bits werden getaktet, wohingegen die Kontrolllogik als asynchroner Logikblock realisiert ist. Mit jeder Taktflanke werden die anliegenden Daten gemeinsam mit der anliegenden Adresse in den "Buffer 1" übernommen, und der alte Inhalt vom "Buffer 1" in den "Buffer 2" verschoben (Gleichzeitig wird der alte Wert von "V1" nach "V2" verschoben). Der neue Pufferinhalt des "Buffer 1" mittels des Valid Bits "V1" als gültig markiert, wenn das Write Enable Signal anliegt und das Rollbacksignal inaktiv ist (Wenn also wirklich in das Registerfile geschrieben werden soll, und kein Rollback erfolgt). Die Daten des "Buffer 2" werden nur dann in das eigentliche Registerfile übertragen, wenn der Pufferinhalt mittels "V2" als gültig markiert ist, und das Rollbacksignal inaktiv ist. Um ein Rollback durchzuführen, wird das Rollbacksignal auf aktiv gesetzt ist, was dazu führt, dass bei der nächsten Taktflanke die beiden Valid Bits (V1 und V2) auf ungültig gesetzt werden, und noch im selben Takt ein Schreiben auf des Registerfile unterbunden wird.

Das Bestimmen des aktuellsten gültigen Wertes bei Lesezugriffen, gestaltet sich bei dem rollbackfähigen Registerfile etwas aufwendiger als bei dem zuvor beschriebenen rollbackfähigen Einzelregister, und wird deshalb in Pseudocode beschrieben:

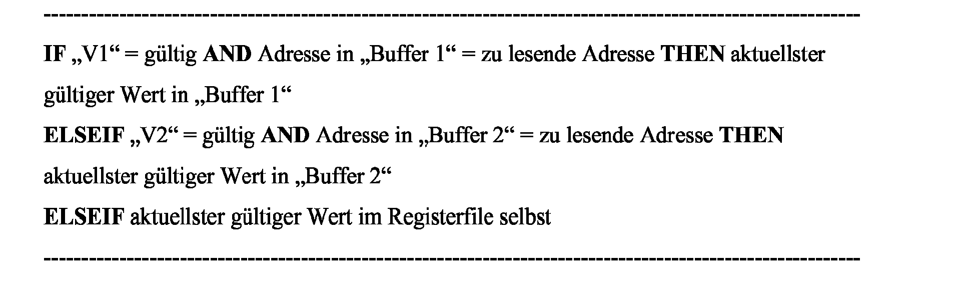

Das gesamte Verhalten des rollbackfähigen Registerfiles wird durch die Kontrolleinheit gesteuert. Das Verhalten der Kontrolleinheit ist durch die Wahrheitstabelle in Figur 11 spezifiziert:
1. Wenn das Rollback Signal aktiv ist (also rb=0 da Rollback ein low-aktives Signal ist) wird prinzipiell kein neuer Wert in das Registerfile übernommen (we=0). Der Ausgang darf einen beliebigen Wert liefern.
2. Wenn das Rollback Signal inaktiv (rb=1) ist, und beide Puffer als ungültig markiert (vb1=0,vb2=0) sind, wird kein neuer Wert in das Registerfile übernommen (we=0). Am Ausgang muss dann der aus dem Registerfile gelesene Wert anliegen (do=dr).
3. Wenn das Rollback Signal inaktiv (rb=1) ist, der erste Puffer als ungültig (vb1=0) und der zweite Puffer als gültig (vb2=1) markiert ist und die zu lesende Adresse der im zweiten Puffer gespeicherten Adresse entspricht ((ra=ba2) = true), so muss am Ausgang der Dateninhalt des zweiten Puffers anliegen (do=db2). Der Inhalt des zweiten Puffers wird in das Registerfile geschrieben (we=1).
4. Wenn das Rollback Signal inaktiv (rb=1) ist, der erste Puffer als ungültig (vb1=0) und der zweite Puffer als gültig (vb2=1) markiert ist und die zu lesende Adresse der im zweiten Puffer gespeicherten Adresse nicht entspricht ((ra=ba2) = false), so muss am Ausgang der aus dem Registerfile gelesene Wert anliegen (do=dr). Der Inhalt des zweiten Puffers wird in das Registerfile geschrieben (we=1).
5. Wenn das Rollback Signal inaktiv (rb=1) ist, der erste Puffer als gültig (vb1=1) und der zweite Puffer als ungültig (vb2=0) markiert ist und die zu lesende Adresse der im ersten Puffer gespeicherten Adresse entspricht ((ra=ba1) = true), so muss am Ausgang der Dateninhalt des ersten Puffers anliegen (do=db1). Das Registerfile wird nicht beschrieben (we=0).
   Wenn das Rollback Signal inaktiv (rb=1) ist, der erste Puffer als gültig (vb1=1) und der zweite Puffer als ungültig (vb2=0) markiert ist und die zu lesende Adresse der im ersten Puffer gespeicherten Adresse nicht
6. entspricht ((ra=ba1) = false), so muss am Ausgang der aus dem Registerfile gelesene Wert anliegen (do=dr). Das Registerfile wird nicht beschrieben (we=0).
7. Wenn das Rollbacksignal inaktiv (rb=1) ist, beide Puffer als gültig markiert sind (vb1=1, vb2=1) und die zu lesende Adresse der im ersten Puffer gespeicherten Adresse entspricht ((ra=ba1) = true), so muss am Ausgang der Dateninhalt des ersten Puffers anliegen (do=db1). Der Inhalt des zweiten Puffers wird in das Registerfile geschrieben (we=1).
8. Wenn das Rollbacksignal inaktiv (rb=1) ist, beide Puffer als gültig markiert sind (vb1=1, vb2=1), die zu lesende Adresse der im ersten Puffer gespeicherten Adresse nicht entspricht ((ra=ba1) = false) und die zu lesende Adresse der im zweiten Puffer gespeicherten Adresse entspricht ((ra=ba2) = true), so muss am Ausgang der Dateninhalt des zweiten Puffers anliegen (do=db2). Der Inhalt des zweiten Puffers wird in das Registerfile geschrieben (we=1).
9. Wenn das Rollbacksignal inaktiv (rb=1) ist, beide Puffer als gültig markiert sind (vb1=1, vb2=1), die zu lesende Adresse der im ersten Puffer gespeicherten Adresse nicht entspricht ((ra=ba1) = false) und die zu lesende Adresse der im zweiten Puffer gespeicherten Adresse auch nicht entspricht ((ra=ba2) = false), so muss am Ausgang der aus dem Registerfile gelesene Wert anliegen (do=dr). Der Inhalt des zweiten Puffers wird in das Registerfile geschrieben (we=1).

Das Diagram in Tabelle 3 zeigt den Ablauf des Instruction Retry Mechanism (IRM) anhand eines Beispiels. Dabei wird angenommen, dass Master und Checker mit einem Taktversatz von einem Takt laufen, und dass ein Fehler während der Abarbeitung der Instruktion Nummer 50 auftritt.

| Cycle | | IF | DE | EX | |
|---|---|---|---|---|---|
| 1 | Master | 52 | 51 | 50 | Master is executing instruction 50; |
| | Checker | 51 | 50 | 49 | Checker is executing instruction 49 |
| 2 | Master | 53 | 52 | 51 | Master has executed instruction 50; |
| | Checker | 52 | 51 | 50 | Checker is currently executing instruction 50; |
| 3 | Master | 54 | 53 | 52 | Checker has executed instruction 50; |
| | Checker | 53 | 52 | 51 | Results are compared; Error is detected; Rollback is triggered |
| 4 | Master | xxx | xxx | xxx | Essential Registers have been rolled back; The IRT (Instruction Retry Trap) can be triggered now; |
| | Checker | xxx | xxx | xxx | |
| 5 | Master | RTR | flushed | flushed | The pipeline is flushed, and the RTR (Return from Trap Routine) Instruction is fetched |
| | Checker | RTR | flushed | flushed | |
| 6 | Master | any inst. | RTR | flushed | RTR propagates |
| | Checker | any inst. | RTR | flushed | |
| 7 | Master | any inst. | any inst. | RTR | RTR propagates |
| | Checker | any inst. | any inst. | RTR | |
| 8 | Master | 50 | flushed | flushed | RTR has been executed; Trap is left; |
| | Checker | 49 | flushed | flushed | Pipeline is flushed; Instruction 50 (49) is fetched by the Master (Checker). |
| 9 | Master | 51 | 50 | flushed | Execution continues |
| | Checker | 50 | 51 | flushed | |
| 10 | Master | 52 | 51 | 50 | Execution continues |
| | Checker | 51 | 50 | 49 | |
| 11 | Master | 53 | 52 | 51 | Master has executed instruction 50 |
| | Checker | 52 | 51 | 50 | |
| 12 | Master | 54 | 53 | 52 | Checker has executed instruction 50; |
| | Checker | 53 | 52 | 51 | Results are compared; Comparison is successful; Error has been recovered |

**Tabelle 3: Beispielablauf des Instruction Retry Mechanismus IRM bei Taktversatz**

| Legend: | |
|---|---|
| 4-7 | The shaded region shows the execution of the Instruction Retry Mechanism (IRM) |
| IF | Instruction Fetch Stage |
| DE | Decode Stage |
| EX | Execute Stage |
| RTR | Return from Trap Routine: Processor leaves the trap routine and continues the execution at the instruction where it has been interrupted before by the trap routine |
| xxx | Inconsistent State: Since only the Essential Registers are rolled back, while the other registers retain their values, the whole processor state becomes inconsistent. |

Im ersten beobachteten Takt ist der Master gerade dabei, die Instruktion 50 auszuführen, während der Checker Instruktion 49 ausfuhrt. Die Überprüfung der Instruktion 50 kann erst zwei Takte später (Takt 3) erfolgen, wenn beide CPUs diese Instruktion bereits ausgeführt haben. In diesem Takt wird ein Fehler erkannt, und das *Rollback* für die *Essential Register* getriggert. Im darauf folgenden Takt (Takt 4) sind die Essential Registers bereits um 2 Takte zurückgerollt (Die Essential Registers befinden sich nun wieder im selben Zustand in dem sie sich im Takt 1 befunden haben). Da bis jetzt nur die Essential Registers zurückgerollt wurden, und die die restlichen Register des Prozessors ihren alten Wert behalten haben, befmdet sich der Prozessor in einem inkonsistenten Zustand. Dennoch ist die Vorbedingung für das korrekte Auslösen eines Traps erfüllt (die Essential Registers besitzen korrekte und konsistente Werte). Im selben Takt wird nun der *InstructionRetryTrap* (IRT) getriggert. Der InstructionRetryTrap besteht aus einer einzigen Instruktion, der "ReturnFromTrapRoutine (RTR)" - Instruktion. Im Takt Nummer 5 wird die RTR - Instruktion gefetched. Im Takt 7 hat die RTR - Instruktion die Execute Stufe des Prozessors erreicht (in beiden CPUs). Durch das Ausführen der RTR - Instruktion wird die Pipeline beider CPUs geflushed, und es wird in beiden CPUs die Instruktionsadresse gefetched, die sich zum Zeitpunkt des Auslösens des InstructionRetryTrap (IRT) im "PC2" Register (Figur 8) der jeweiligen CPU befunden hat (Im "PC2" Register wird die Rücksprungadresse für Interrupts und Traps gespeichert). Die Ausführung wird also an der Adresse 50 bzw. 49 im Master bzw. Checker fortgesetzt. Zu Beginn von Takt 12 haben beide CPUs die zuvor fehlerhafte Instruktion vollständig wiederholt, und die Resultate wurden erfolgreich überprüft.

### Bitflips im Registerfile

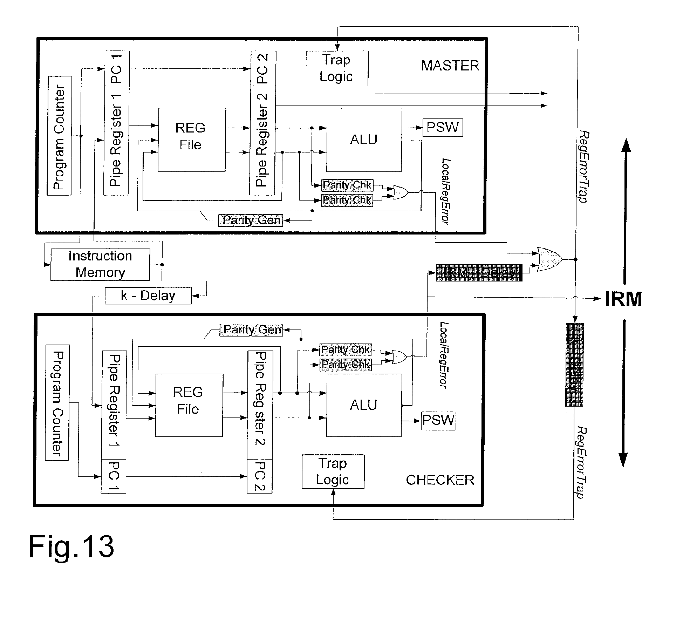

Unter einem Bitflip verstehen wir eine durch eine Störung verursachte Umkehrung des logischen Wertes eines Bits in einem Register.
Durch das Zurückrollen des Prozessors um eine konstante Anzahl von Takten *t* können Bitflips im Registerfile im Allgemeinen nicht behoben werden, da sie Register betreffen können, die zum letzten Mal zu einem Zeitpunkt beschrieben wurden, der weiter als t Takte zurückliegt. Um solche Fehler beheben zu können, wurde ein zusätzlicher Mechanismus integriert, der Registerfehler als solche erkennt, und dem Betriebssystem weitermeldet. Dabei werden die einzelnen Register mit Parity Bits abgesichert (Figur 13). Bei jedem Lesezugriff auf das Registerfile wird der ausgelesene Wert einem Parity Check unterzogen. Registerfehler werden nicht in Hardware behoben, sondern durch einen Trap (*RegErrorTrap*) an das Betriebssystem gemeldet. Durch die im Trap gespeicherte Rücksprungadresse weiß das Betriebssystem genau, welche Instruktion auf den fehlerhaften Registerwert zugegriffen hat. Dadurch ist es dem Betriebssystem möglich, spezifisch zu reagieren (Wiederholung der betroffenen Task oder Aufruf eines spezifischen Error Handlers).

Um die Synchronität der beiden CPUs zu erhalten, muss der *RegErrorTrap* (RET) in beiden CPUs genau bei derselben Instruktion ausgelöst werden. Bei einem Dual Core mit Taktversatz bedeutet das, dass auch der RET versetzt ausgelöst werden muss.
Um das Versetzte Auslösen des Traps zu beschreiben, wurden Zeitdiagramme beigefügt, die einen Taktversatz von k=1 annehmen, und anhand eines Beispiels zeigen, wie der Master bzw. der Checker auf Bitflips im Registerfile reagiert. Dabei wird angenommen, dass jeweils die Instruktion an der Adresse 50 einen fehlerhaften Registerinhalt ausliest.

RET1, RET2, RET3, RET4 usw. bezieht sich auf die erste, zweite, dritte, vierte usw. Instruktion des *RegErrorTrap*. Was diese Trap- Routine genau tut (Taskwiederholung, Aufruf eines Exception Handlers, ...) und wie viele Instruktionen sie beinhaltet ist den Programmierern des Betriebssystems überlassen.

Tritt im Master ein Parity Fehler auf (in dem beschriebenen Beispiel bei Instruktion 50) geht der Master im nächsten Takt in den RegErrorTrap. Die "k-Delay" Komponente (siehe Blockschaltbild in Figur 13) sorgt dafür, dass der Checker erst k Takte später (k=1), wenn er selbst die Instruktion 50 erreicht hat, seinen *RegErrorTrap* auslöst (siehe Ablaufdiagram in Tabelle 4).

**Tabelle 4: Beispielablauf für das Auslösen des RegErrorTrap- RET**

| Master detects parity error | | | | | |
|---|---|---|---|---|---|
| Cycle | | IF | DE | EX | |
| 1 | Master | 52 | 51 | 50 | Register parity error in instruction 50 detected by |
| | Checker | 51 | 50 | 49 | the master; Master's RET is triggered |
| 2 | Master | RET1 | flushed | flushed | Master enters RegisterErrorTrap (RET); |
| | Checker | 52 | 51 | 50 | Checker's RET is triggered by the **"k-Delay"** Component |
| 3 | Master | RET2 | RET1 | flushed | Checker enters RegisterErrorTrap (RET) |
| | Checker | RET1 | flushed | flushed | |

| Checker detects parity error | | | | | |
|---|---|---|---|---|---|
| Cycle | | IF | DE | EX | |
| 1 | Master | 53 | 52 | 51 | Register parity error in instruction 50 detected by |
| | Checker | 52 | 51 | 50 | the checker; Rollback (IRM) is triggered |
| 2 | Master | xxx | xxx | xxx | Essential Registers have been rolled back; The IRT |
| | Checker | xxx | xxx | xxx | (Instruction Retry Trap) can be triggered now; |
| 3 | Master | RTR | flushed | flushed | The pipeline is flushed, and the RTR (Return from |
| | Checker | RTR | flushed | flushed | Trap Routine) Instruction is fetched |
| 4 | Master | any inst. | RTR | flushed | RTR propagates |
| | Checker | any inst. | RTR | flushed | |
| 5 | Master | any inst. | any inst. | RTR | RTR propagates |
| | Checker | any inst. | any inst. | RTR | |
| 6 | Master | 49 | flushed | flushed | After the InstructionRetryTrap is left, the execution |
| | Checker | 48 | flushed | flushed | is continued at instruction 49 at the master and at instruction 48 at the slave |
| 7 | Master | 50 | 49 | flushed | normal execution |
| | Checker | 49 | 48 | flushed | |
| 8 | Master | 51 | 50 | 49 | normal execution |
| | Checker | 50 | 49 | 48 | |
| 9 | Master | 52 | 51 | 50 | Master has instruction 50 in the execute stage; |
| | Checker | 51 | 50 | 49 | Master's RET is triggered by the **"IRM-Delay"** component |
| 10 | Master | RET1 | flushed | flushed | Master enters RegisterErrorTrap (RET); |
| | Checker | 52 | 51 | 50 | Checker's RET is triggered by the **"k-Delay"** Component |
| 11 | Master | RET2 | RET1 | flushed | Checker enters RegisterErrorTrap (RET) |
| | Checker | RET1 | flushed | flushed | |
| Legend: | | | | | |
| 2-5 | The shaded region shows the execution of the Instruction Retry Mechanism (IRM) | | | | |
| RTR | Return from Trap Routine: Processor leaves the trap routine and continues the execution at the instruction where it has been interrupted before by the trap routine | | | | |
| RET | Register Error Trap: A parity error in the Register File is signaled to the operating system | | | | |
| xxx | Inconsistent State: Since only the Essential Registers are rolled back, while the other registers retain their values, the whole processor state becomes inconsistent. | | | | |

Entdeckt der Checker einen Parity Fehler (in dem beschriebenen Beispiel bei Instruktion 50) wird vorerst der beschriebene Mechanismus zur Instruktionswiederholung IRM getriggert (siehe Ablaufdiagram in Tabelle 4). Zu Beginn des Takt 6 wurde dadurch wieder einen Zustand hergestellt in dem der Master die Instruktion 49, und der Checker die Instruktion 48 gefetched hat (Bei einem Dual Core mit einem Taktversatz von k = 1 rollt IRM prinzipiell beide CPUs um 2 Instruktionen zurück).
3 Taktzyklen später (zu Beginn des Taktes Nummer 9) befmdet sich die Instruktion 50 in der Execute Stufe des Masters. Von diesem Zustand aus wird durch die "IRM-Delay" Komponente (siehe Blockschaltbild in Figur 13) derselbe Mechanismus getriggert der auch für Parity Fehler im Master verantwortlich ist. Der Master geht im Takt 11 in den *RegErrorTrap*, und der Checker folgt, durch die k-cycle Delay Komponente verzögert, einen Takt später.

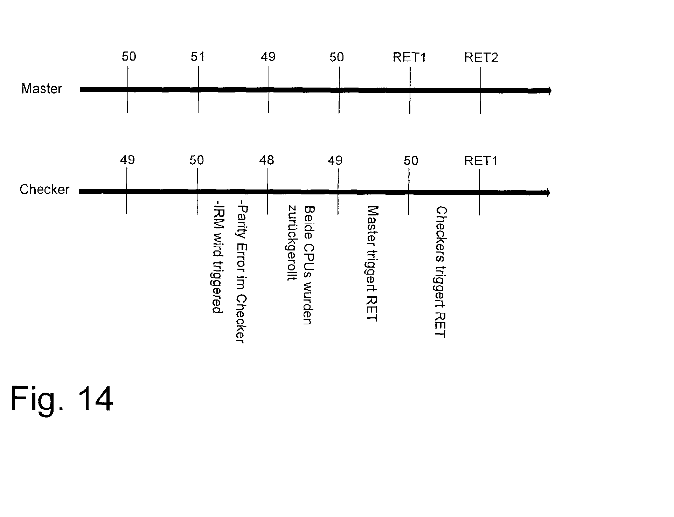

Figur 14 schließlich zeigt das Auslösen des RET für Parity Fehler im Checker noch einmal als Instruktionsdiagram.

### Glossar

| | |
|---|---|
| **IRM - Instruction Retry Mechanism** | Der Beschriebene Recovery Mechanismus zur Herstellung eines gültigen Prozessorzustands; besteht aus 2 Phasen: |
| | - Rollback der Essential Registers |
| | - Triggern des InstructionRetryTrap (IRT); |
| | Wird durch das Rollback Signal **(Fehler! Verweisquelle konnte nicht gefunden werden.)** getriggert; |
| | Parity - Fehler im Registerfile werden durch IRM nicht behoben, sondern durch RET an das Betriebssystem gemeldet |
| **IRT - InstructionRetryTrap** | Eine "leere" Trap Routine die aus einem einzigen Befehl besteht: dem RTR - Befehl |
| **RTR - Return from Trap Routine** | Befehl zum Verlassen eines Traps; Muss im Befehlssatz des Prozessors bereits vorhanden sein |
| **RET - RegErrorTrap** | Ein Trap der das Betriebssystem über Parity - Fehler im Registerfile informiert; |
| | In diesem Fall wird das Recovery vom Betriebssystem übernommen |

## Patentansprüche

1. Vorrichtung zur Behebung von Fehlern bei einem Prozessor mit zwei Ausführungseinheiten, wobei Register vorgesehen sind in welchen Instruktionen und/oder diesen zugeordnete Informationen ablegbar sind, wobei die Instruktionen redundant in beiden Ausführungseinheiten abgearbeitet werden und Vergleichsmittel enthalten sind, die derart gestaltet sind, dass durch einen Vergleich der Instruktionen und/oder der zugeordneten Informationen eine Abweichung und damit ein Fehler erkannt wird, **dadurch gekennzeichnet, dass** eine Aufteilung der Register des Prozessors in erste Register und zweite Register vorgegeben ist, wobei die ersten Register derart gestaltet sind, dass aus ihnen ein vorgebbarer Zustand des Prozessors und Inhalte der zweiten Register herleitbar sind, wobei Mittel zum Zurückrollen enthalten sind, die derart ausgebildet sind, dass wenigstens eine Instruktion und/oder die Informationen in den ersten Registern zurückgerollt und erneut ausgeführt und/oder wiederhergestellt werden.

2. Vorrichtung nach Anspruch 1, **dadurch gekennzeichnet, dass** die Mittel zum Zurückrollen nur den ersten Registern zugeordnet und/oder nur in diesen enthalten sind.

3. Vorrichtung nach Anspruch 1, **dadurch gekennzeichnet, dass** die Mittel zum Zurückrollen derart gestaltet sind, dass wenigstens eine Instruktion und/oder die Informationen nur in den ersten Registern zurückgerollt wird.

4. Vorrichtung nach Anspruch 1, **dadurch gekennzeichnet, dass** die Vergleichsmittel vor den ersten Registern vorgesehen sind.

5. Vorrichtung nach Anspruch 1, **dadurch gekennzeichnet, dass** die Vergleichsmittel vor den Ausgängen vorgesehen sind.

6. Vorrichtung nach Anspruch 1, **dadurch gekennzeichnet, dass** jedem ersten Register wenigstens ein Pufferbaustein zugeordnet ist.

7. Vorrichtung nach Anspruch 1, **dadurch gekennzeichnet, dass** die Register in wenigstens einem Registerfile organisiert sind, wobei dem Registerfile wenigstens ein Pufferbaustein mit einem Pufferspeicher für Adressen und einem Pufferspeicher für Daten zugeordnet sind.

8. Vorrichtung nach Anspruch 6 oder 7, **dadurch gekennzeichnet, dass** Mittel enthalten sind die eine Gültigkeit des Pufferbausteins oder Pufferspeichers vorgeben und/oder anzeigen.

9. Vorrichtung nach Anspruch 1, **dadurch gekennzeichnet, dass** diese derart ausgestaltet ist, dass die beiden Ausführungseinheiten parallel ohne Taktversatz arbeiten.

10. Vorrichtung nach Anspruch 1, **dadurch gekennzeichnet, dass** diese derart ausgestaltet ist, dass die beiden Ausführungseinheiten mit Taktversatz arbeiten.

11. Vorrichtung nach Anspruch 1, **dadurch gekennzeichnet, dass** wenigstens alle ersten Register doppelt vorhanden sind und jeweils einmal einer Ausführungseinheit zugeordnet sind.

12. Prozessor, der eine Vorrichtung nach Anspruch 1 enthält.

13. Verfahren zur Behebung von Fehlern bei einem Prozessor mit zwei Ausführungseinheiten, wobei Instruktionen und/oder diesen zugeordnete Informationen in Registern ablegbar sind, wobei die Instruktionen redundant in beiden Ausführungseinheiten abgearbeitet werden und durch einen Vergleich der Instruktionen und/oder der zugeordneten Informationen eine Abweichung und damit ein Fehler erkannt wird, **dadurch gekennzeichnet, dass** die Register des Prozessors in erste Register und zweite Register aufgeteilt sind, wobei aus den ersten Registern ein vorgebbarer Zustand des Prozessors und Inhalte der zweiten Register herleitbar sind, wobei bei Auftreten eines Fehlers wenigstens eine Instruktion und/oder die Informationen in den ersten Registern zurückgerollt und erneut ausgeführt und/oder wiederhergestellt werden.

14. Verfahren nach Anspruch 13, **dadurch gekennzeichnet, dass** eine Gültigkeit der Instruktionen und/oder Informationen über eine Gültigkeitskennung vorgebbar und/oder feststellbar ist, wobei die Gültigkeitskennung über ein Rücksetzsignal rückgesetzt wird.

15. Verfahren nach Anspruch 13, dadruch **gekennzeichnet**, dass eine Gültigkeit der Instruktionen und/oder Informationen über eine Gültigkeitskennung vorgebbar und/oder feststellbar ist, wobei die Gültigkeitskennung über ein Gattersignal, insbesondere eines UND-Gatters, rückgesetzt wird.

16. Verfahren nach Anspruch 1, **dadurch gekennzeichnet, dass** das Zurückrollen in zwei Phasen aufgeteilt ist und zunächst die Instruktionen und/oder Informationen der ersten Register zurückgerollt werden und dann die Inhalte der zweiten Register hergeleitet werden.

17. Verfahren nach Anspruch 1, **dadurch gekennzeichnet, dass** die Inhalte der zweiten Register durch einen Trap/Exception Mechanismus hergeleitet werden.

18. Verfahren nach Anspruch 13, **dadurch gekennzeichnet, dass** zusätzlich zum Zurückrollen wenigstens ein Bitflip eines ersten Registers einer Ausführungseinheit behoben wird, indem der Bitflip in beiden Ausführungseinheiten angezeigt wird.

19. Verfahren nach Anspruch 18, **dadurch gekennzeichnet, dass** der Bitflip in beiden Ausführungseinheiten gleichzeitig angezeigt wird, wenn die Ausführungseinheiten ohne Taktversatz arbeiten.

20. Verfahren nach Anspruch 18, **dadurch gekennzeichnet, dass** der Bitflip in beiden Ausführungseinheiten versetzt entsprechend einem vorgebbaren Taktversatz angezeigt wird, wenn die Ausführungseinheiten mit diesem Taktversatz arbeiten.
